# EUROPEAN PATENT APPLICATION

(11) **EP 4 687 086 A1**
(43) Date of publication of application: **04.02.2026**
(21) Application number: 25189272.5
(22) Date of filing: 14.07.2025
(51) Int. Cl.: G06Q 10/20

(54) **MAINTENANCE SCHEDULING AND WORK ORDER GENERATION**

(30) Priority: 29.07.2024 US 202418787157
(71) Applicant: Rockwell Automation Technologies, Inc., Mayfield Heights, OH 44124 (US)
(72) Inventor: Bamal, Nivedan, Mayfield Heights, OH, 44124 (US); Bhardwaj, Jiten, Mayfield Heights, OH, 44124 (US); Chahley, Michael, Mayfield Heights, OH, 44124 (US); Domakhina, Liudmila, Mayfield Heights, OH, 44124 (US); Esmalifalak, Mohammad, Mayfield Heights, OH, 44124 (US); Jamwal, Gourav, Mayfield Heights, OH, 44124 (US); Kong, Jason Yiu Kei, Mayfield Heights, OH, 44124 (US); Menezes, Warren M, Mayfield Heights, OH, 44124 (US); Rempel, Katrina R, Mayfield Heights, OH, 44124 (US)
(74) Representative: Grünecker Patent- und Rechtsanwälte PartG mbB

(57) **Abstract**

A work order management system automates the process of scheduling maintenance tasks and generating corresponding work orders via analysis of monitored data generated by the industrial assets. The work order management system can monitor control, status, or operational data from industrial devices on the plant floor, and initiate creation of work orders based on a determination that the monitored industrial data indicates a current or predicted performance risk requiring investigation or maintenance. The system can leverage generative artificial intelligence (AI) or other types of AI in connection with determining when and how to schedule a maintenance task intended to mitigate asset risk. The system can also factor contextual information when determining whether to create and schedule a work order, such as the cost of operator or maintenance time, scheduled plant downtimes, environmental factors (e.g., humidity), time of year, supplier issues, and other considerations.

## Description

### BACKGROUND

The subject matter disclosed herein relates generally to industrial maintenance, and, more specifically, to industrial work order management.

### BRIEF DESCRIPTION

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system is provided, comprising a monitoring component configured to monitor industrial asset data generated by industrial assets in service within an industrial facility, wherein the industrial asset data comprises operational and status information for the industrial assets; an analysis component configured to, in response to a determination, based on analysis of the industrial asset data, that a subset of the industrial asset data satisfies a condition indicative of a current or predicted risk to a first industrial asset of the industrial assets, formulate one or more first maintenance tasks predicted to mitigate the current or predicted risk, identify, based on defined interdependencies between the industrial assets, a second industrial asset of the industrial assets having a likelihood of experiencing a performance issue due to the current or predicted risk to the first industrial asset, and formulate one or more second maintenance tasks predicted to mitigate the performance issue; and a work order generation component configured to, in response to the determination by the analysis component that the subset of the industrial data satisfies the condition, generate a work order prescribing the one or more first maintenance tasks and the one or more second maintenance tasks.

Also, one or more embodiments provide a method, comprising monitoring, by a system comprising a processor, industrial asset data generated by industrial assets that are in service within an industrial facility, wherein the industrial asset data comprises operational and status information for the industrial assets; and in response to determining, based on analysis of the industrial asset data, that a subset of the industrial asset data satisfies a condition indicative of a current or predicted risk to a first industrial asset of the industrial assets: determining, by the system, one or more first maintenance tasks predicted to mitigate the current or predicted risk; identifying, by the system based on defined interdependencies between the industrial assets, a second industrial asset of the industrial assets having a likelihood of experiencing a performance issue due to the current or predicted risk to the first industrial asset; determining, by the system, one or more second maintenance tasks predicted to mitigate the performance issue; and generating, by the system, a work order prescribing the one or more first maintenance tasks and the one or more second maintenance tasks.

Also, according to one or more embodiments, a non-transitory computer-readable medium is provided having stored thereon instructions that, in response to execution, cause a work order management system to perform operations, the operations comprising monitoring industrial asset data generated by industrial assets that are in service within an industrial facility, wherein the industrial asset data comprises operational and status information for the industrial assets; and in response to determining, based on analysis of the industrial asset data, that a subset of the industrial asset data satisfies a condition indicative of a current or predicted risk to an industrial asset of the industrial assets: formulating one or more first maintenance tasks predicted to mitigate the current or predicted risk; identifying, based on defined interdependencies between the industrial assets, a second industrial asset of the industrial assets having a likelihood of experiencing a performance issue due to the current or predicted risk to the first industrial asset; formulating one or more second maintenance tasks predicted to mitigate the performance issue; and generating a work order prescribing the one or more first maintenance tasks and the one or more second maintenance tasks.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of a work order management system.
FIG. 3 is a diagram illustrating an example architecture for automatically generating work orders based on analysis of real-time or historical industrial asset performance.
FIG. 4 is an example work order display that can be rendered on a client device by the user interface component.
FIG. 5 is another example view of the work order display in which the user has selected the Labor Tasks category from the navigation bar.
FIG. 6 is a diagram illustrating training of models used by some embodiments of the analysis component.
FIG. 7 is a diagram illustrating generation and assignment of a work order to one or more selected technicians by the work order management system.
FIG. 8 is a diagram illustrating tracking of technician KPIs.
FIG. 9 is a diagram illustrating delivery of maintenance notifications to a technician's client device.
FIG. 10 is an example interface display that can be generated by the work order management system to render work order analysis results on a client device.
FIG. 11 is a diagram illustrating exchange of generative AI dialog messages between a user and the work order management system.
FIG. 12 is a flowchart of an example methodology for generating work orders in response to a detected risk to an industrial asset.
FIG. 13 is a flowchart an example methodology for using trained models to detect actionable risk conditions in industrial assets and to generate work orders to address these risk conditions.
FIG. 14 is an example computing environment.
FIG. 15 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers, their associated I/O devices, motor drives, and other such industrial devices are central to the operation of modern automation systems. Industrial controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

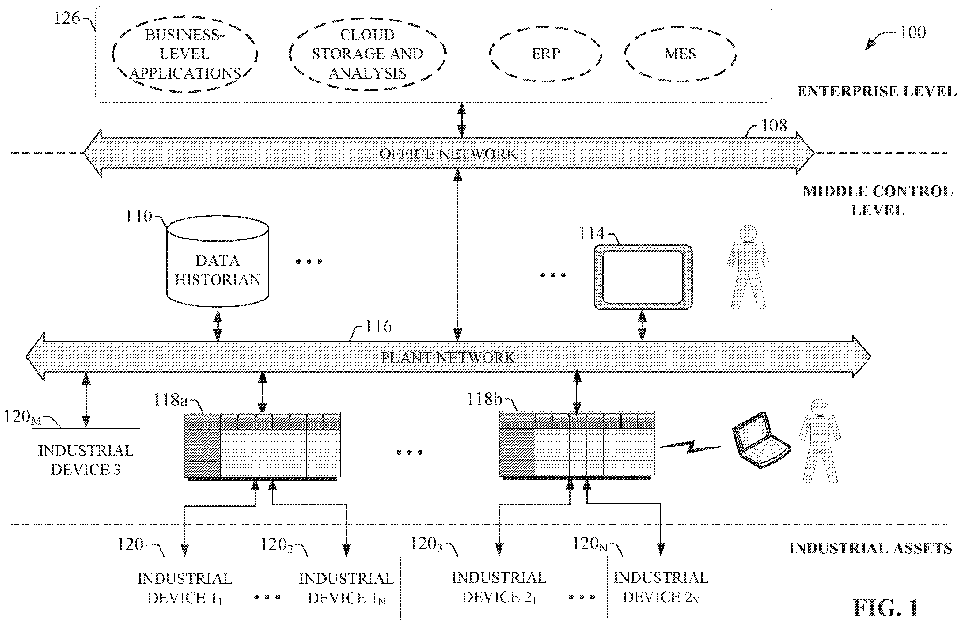

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like. Some industrial devices, such as industrial device 120M, may operate autonomously on the plant network 116 without being controlled by an industrial controller 118.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over the plant network 116 using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems (MES), data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

Industrial facilities typically house and operate many industrial assets, machines, or equipment. Many of these assets require regular proactive maintenance to ensure continued optimal operation, in addition to unplanned repair operations to address unexpected downtime events, such as machine malfunctions. To manage the large number of maintenance operations carried out at a given industrial enterprise, work order management systems can be used to initiate work orders for new maintenance operations to be performed, to track the statuses of these work orders, and to keep a record of maintenance operations performed within the plant. In a typical scenario for addressing a reactive maintenance concern, when metered or observed asset performance indicators - e.g., vibration values, temperature values, product counts, a machine downtime occurrence, etc. - indicate a possible performance concern requiring investigation or maintenance, a maintenance technician or manager creates and submits a work order for the maintenance operation to the work order management system. Maintenance personnel are then assigned the task of performing the maintenance task or investigation. As the work is carried out, maintenance actions performed in connection with the schedule maintenance task are submitted and recorded with the work order, which remains open as its corresponding maintenance task is performed. The work order is then closed once the task is completed. A similar workflow can be used to schedule regular proactive or preventative maintenance on industrial assets.

This approach to maintenance management requires operators, maintenance staff, or supervisors to visually observe when machine performance indicators, or predetermined asset maintenance schedules, necessitate scheduling of a maintenance action and creation of a corresponding work order for the maintenance task. If a performance concern is observed or a preventative maintenance task to be scheduled, the work order must be created by a maintenance supervisor or technician so that the maintenance work is properly logged and tracked. The process of manually creating and submitting work orders is susceptible to errors due to improperly entered work order information. Errors in the work order submission process are common, and these errors may have associated risks that directly affect the underlying industrial assets on which maintenance is performed, or that adversely affect future decisions made by the industrial enterprise.

To address these and other issues, one or more embodiments described herein provide a work order management system that automates the process of scheduling maintenance tasks and generating corresponding work orders via analysis of monitored data generated by the industrial assets. In one or more embodiments, the work order management system can monitor control, status, and/or operational data from industrial devices on the plant floor, and initiate creation of work orders based on a determination that the monitored industrial data indicates a current or predicted performance risk requiring investigation or maintenance. In some embodiments, the work order management system can leverage generative artificial intelligence (AI) or other types of AI in connection with determining when and how to schedule a maintenance task intended to mitigate asset risk. The system can also factor various types of contextual information when determining whether to create and schedule a work order, such as the cost of operator or maintenance time, scheduled plant downtimes, environmental factors (e.g., humidity), time of year, supplier issues, and other considerations.

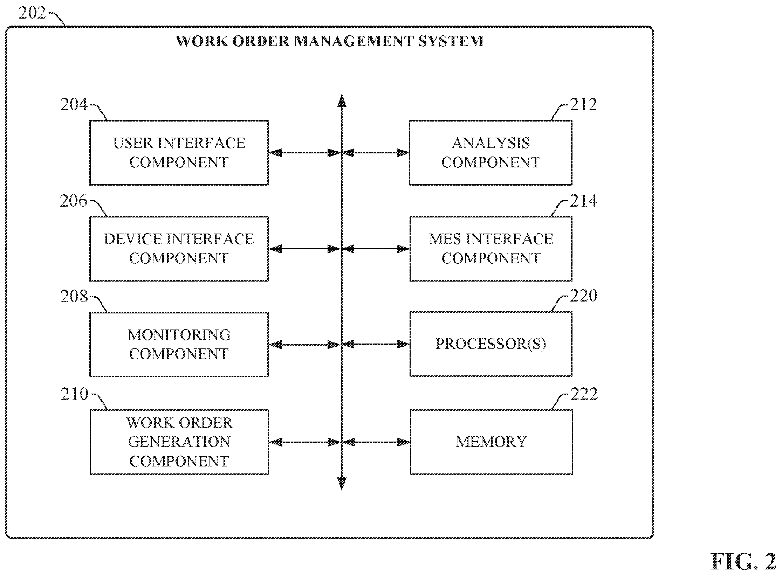

FIG. 2 is a block diagram of a work order management system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computcr(s), computing device(s), automation device(s), virtual machine(s), etc., can cause the machine(s) to perform the operations described.

Work order management system 202 can include a user interface component 204, a device interface component 206, a monitoring component 208, a work order generation component 210, an analysis component 212, an MES interface component 214, one or more processors 220, and memory 222. In various embodiments, one or more of the user interface component 204, device interface component 206, monitoring component 208, work order generation component 210, analysis component 212, MES interface component 214, the one or more processors 220, and memory 222 can be electrically and/or communicatively coupled to one another to perform one or more of the functions of the work order management system 202. In some embodiments, components 204, 206, 208, 210, 212, and 214 can comprise software instructions stored on memory 222 and executed by processor(s) 220. Work order management system 202 may also interact with other hardware and/or software components not depicted in FIG. 2. For example, processor(s) 220 may interact with one or more external user interface devices, such as a keyboard, a mouse, a display monitor, a touchscreen, or other such interface devices.

User interface component 204 can be configured to generate user interface displays that receive user input and render output to the user in any suitable format (e.g., visual, audio, tactile, etc.). In some embodiments, user interface component 204 can render these interface displays on a client device (e.g., a laptop computer, tablet computer, smart phone, etc.) that is communicatively connected to the work order management system 202 (e.g., via a hardwired or wireless connection). Input data that can be received via user interface component 204 can include, but is not limited to, work order data (e.g., work order data field entries), user interface navigation input, natural language chat inputs (e.g., work order generation commands, queries regarding existing work orders or asset risks, etc.), or other such input data. Output data rendered by user interface component 204 can include, but is not limited to, information regarding closed and open work orders, risk levels associated with respective work orders, estimated costs associated with high-risk work orders, or other such output data.

Device interface component 206 can be configured to interface with industrial devices or assets on the plant floor, either directly or via a gateway or edge device, and receive real-time operational and status data from these assets for the purposes of asset health monitoring and analysis. Monitoring component 208 can be configured to monitor specified sets of the collected industrial data for conditions indicative of a performance issue requiring investigation or maintenance. In some embodiments, the sets of industrial data to be monitored, as well as the conditions of this data that indicate a performance concern that requires a maintenance task to be scheduled, can be defined by machine-specific asset models for the industrial equipment being monitored, or can be determined or defined by the system 202 using AT or generative AT analysis of the assets' performance over time.

Work order generation component 210 can be configured to generate work orders based on detected or predicted asset risks. To this end, the work order generation component 210 can leverage real-time or historical asset data collected by the device interface component 206, contextual data (e.g., environmental data, the current time of year, known supplier issues, etc.), data from the industrial enterprise's MES system (e.g., technician work schedules and skill sets, scheduled machine or plant shutdowns, etc.), and other such information. The work order generation component 210 can also generate work orders and schedule corresponding maintenance tasks based on analysis performed by the analysis component 212, which can be assisted using generative AI.

Analysis component 212 can be configured to perform analysis on real-time or historical asset performance data, data obtained from an MES system or a similar high-level enterprise tracking system, contextual information, or other such data to determine when maintenance tasks are to be scheduled, what those maintenance tasks include, and which technicians are to be assigned the tasks. In some embodiments, the analysis component 212 can apply AI or generative AI-assisted analysis to this data in connection with determining when and how maintenance tasks should be scheduled and corresponding work orders generated.

MES interface component 214 can be configured to retrieve information from the MES system that can be used by the analysis component 212 to determine when maintenance tasks should be scheduled, which technicians should be assigned the tasks, the nature of the maintenance tasks that should be performed to mitigate a detected risk, or other such determinations. In some embodiments, the MES interface component 214 can also initiate transmission of notifications to appropriate personnel via the MES in conjunction with generation of work orders.

The one or more processors 220 can perform one or more of the functions described herein with reference to the systems and/or methods disclosed. Memory 222 can be a computer-readable storage medium that stores computer-executable instructions and/or information for performing the functions described herein with reference to the systems and/or methods disclosed. Memory 222 can also store the work order data generated by the work order generation component 210.

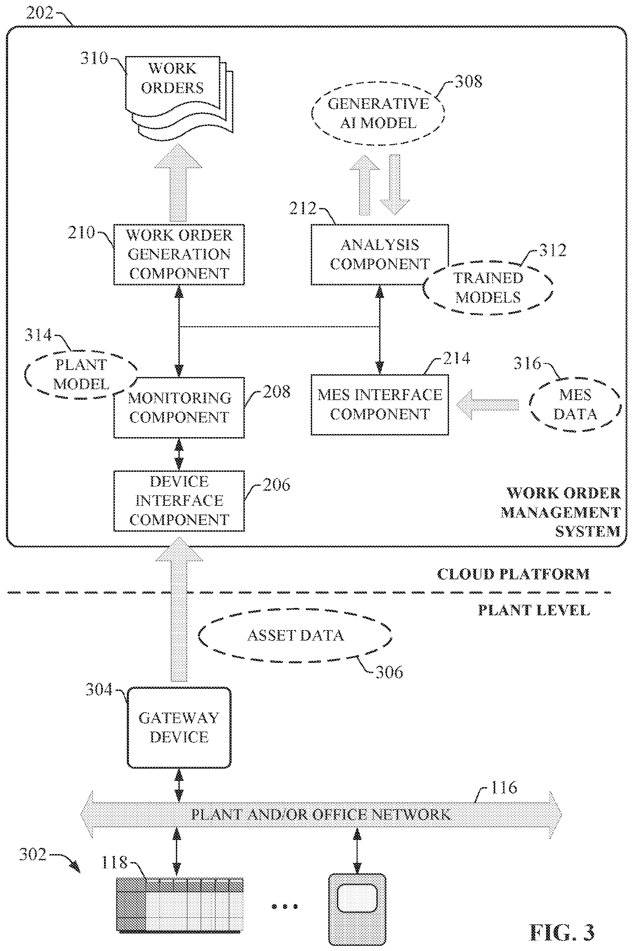

FIG. 3 is a diagram illustrating an example architecture for automatically generating work orders 310 based on analysis of real-time or historical industrial asset performance. Work order management system 202 can be implemented on any suitable platform that allows the system 202 to be accessed via client devices (e.g., desktop computers, laptop computers, smart phones, tablet computers, wearable computing devices, etc.) and that permits the system 202 to access operational and status data generated by industrial assets within a plant facility. For example, system 202 can be installed and executed on an on-premise server device on a plant or office network of an industrial facility. Alternatively, system 202 can be executed on a cloud platform as a set of cloud-based services, allowing users at different industrial facilities to access the system 202, view work orders, receive notifications generated by the system 202, or retrieve work order analysis results. System 202 can also be executed on a public network such as the internet and made accessible to users having suitable authorization credentials. In such embodiments, the system 202 can maintain work orders for different industrial enterprises in a segregated manner, such that employees of a given industrial enterprise can only access work orders and associated analysis results associated with that enterprise. In the example depicted in FIG. 3, work order management system resides and executes on a cloud platform.

In the example architecture of FIG. 3, a gateway device 304 resides on the same plant network 116 as the industrial devices 302 associated with automation systems on the plant floor. These industrial devices 302 can include, for example, industrial controllers 118, motor drives, HMI terminals, telemetry devices (e.g., flow meters, pressure meters, temperature meters, etc.), sensors of various types (e.g., photo-sensors, proximity sensors, etc.), or other such devices. The automation systems and their associated industrial devices 302, machines, and machine components constitute industrial assets for which reactive or proactive maintenance may be scheduled as needed. During operation of the plant's automation systems, gateway device 304 collects asset data 306 from industrial devices 302. This data can include data values read from data tags, data registers, or automation objects defined on one or more industrial controllers 118; data from analog or digital sensors; data from telemetry devices or meters, or other such data. In general, asset data 306 represents status, operational, or performance data for the industrial assets.

In some embodiments, gateway device 304 can contextualize the collected data 306 prior to delivering the data to the work order management system 202 and deliver the processed data to the system 202 as contextualized data. This contextualization can include time-stamping the data, as well as normalizing or otherwise formatting the collected data for analysis by the work order management system 202. In general, gateway device 304 serves as an edge device that interfaces data from the set of industrial devices 302 to either the work order management system 202 or a separate data storage platform accessible to the work order management system 202.

The work order management system's device interface component 206 can remotely interface with the gateway device 304 to receive the collected asset data 306, and a monitoring component 208 of the system 202 can monitor the asset data 306 for conditions indicative of a possible performance issue that necessitates a maintenance action and creation of a corresponding work order. In some embodiments, rather than obtaining asset data 306 from the industrial assets (e.g., industrial devices 302 and their associated machines or automation systems) via an integrated device interface component 206, the system's monitoring component 208 may access other sources of real-time or historical asset data 306 generated by the industrial assets within the plant facility, such as a data historian system, a data lake, or other such systems. Robots can also be used to provide at least some of the asset data 306, which can be used by the system 202 in connection with identifying asset performance issues and generating work orders. For example, inspection robots can traverse inspection routes and collect machine states (e.g., via infrared panel scans, meter readings, etc.) and feed this information to the work order management system 202 as asset data 306.

When the monitoring component 208, assisted by the analysis component 212, determines that the monitored asset data 306 satisfies a condition indicative of a current or predicted asset performance issue requiring investigation or correction by maintenance personnel, system's work order generation component 210 can schedule one or more maintenance tasks predicted to correct the performance issue and generate a corresponding work order 310 for the tasks. The condition detected by the monitoring component 208 that triggers creation of a work order 310 can be, for example, a deviation of one or more data tag values that move outside a defined range of normal or expected values. In an example scenario, a baking process may require an oven temperature to stay within a defined temperature range. Accordingly, values of a data tag or automation object corresponding to this oven temperature can be collected from the industrial controller 118 that monitors and controls the baking process, and this collected data can be provided to the work order management system 202 as part of the asset data 306. The monitoring component 208 monitors this value to determine when the oven temperature deviates from this range and, in response to detecting such a deviation, instructs work order generation component 210 to generate a new open work order 310 for investigation of the temperature control issue. In some embodiments, machine-specific asset models maintained on the work order management system 202 can define which data items or performance parameters of the industrial assets are to be monitored, as well as the conditions of this data that are to trigger creation of work orders 310. In other embodiments, as will be described in more detail below, the system 202 can learn to recognize conditions of the asset data indicative of an elevated risk to an asset using machine learning, AI, generative AI, or other analytic techniques.

In some scenarios in which a given machine performance metric is a function of the current states of other performance metrics, the condition that triggers creation of a work order can be based on a holistic set of data value conditions rather than being based on deviation of a single data value. For example, an expected value of a given performance metric for a machine or automation system - e.g., a conveyor speed, an oven temperature, a fill level, etc. - may depend on the current operating mode of the machine, a speed or temperature of another machine component, or other such factors. The value of the performance metric may also be seasonal or time-specific, such that the expected value of the metric depends on a current time of day, a current day of the week, a current month of the year, or another time function. If the health of a machine or automation system is a function of whether concurrent values of multiple data tags are within an expected holistic value space, the monitoring component 208 can be configured to instruct the work order generation component 210 to generate a work order 310 upon determining that these values are in a collective, concurrent state indicating a potential performance problem.

A work order 310 generated by the work order generation component 210 can contain information about the maintenance task to be performed, including but not limited to an identity of the industrial asset or machine for which maintenance is required, an aspect of the industrial asset that requires attention, a type of the maintenance to be performed, an estimated number of hours to be spent on the maintenance task, an estimated number of personnel to be assigned to the task, a description of the task, or other such information. The work order 310 is initially scheduled in the system 202 as an open work order 310 (that is, the system 202 stores the work order 310 as work order data in memory 222 and assigns an "Open" status to the work order 310) and remains open until completion of its associated maintenance tasks, at which time the system 202 assigns a "Closed" status to the work order 310.

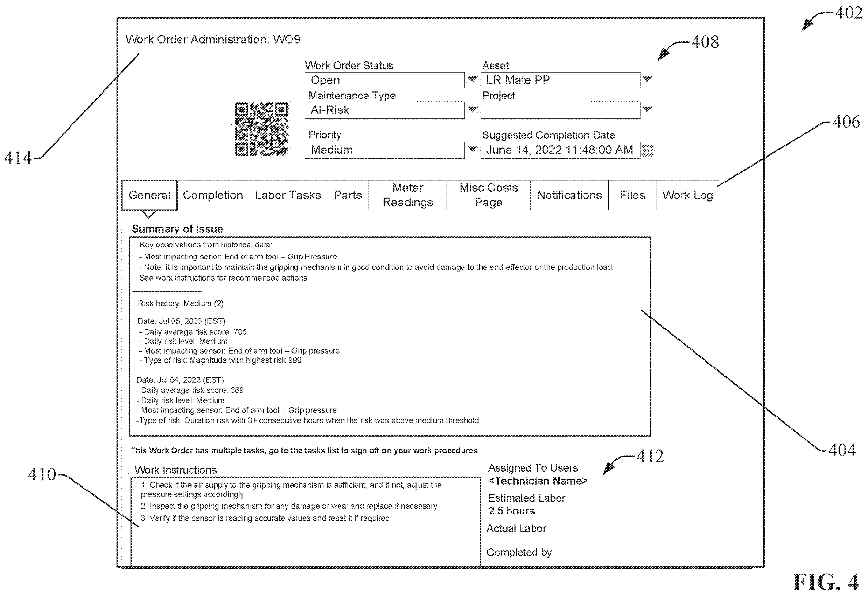

Authorized users can browse and view both open and closed work orders 310 via user interface component 204. FIG. 4 is an example work order display 402 that can be rendered on a client device by the user interface component 204. When a user selects a work order 310 via interaction with the work order system's primary user interface, the user interface component 204 can render a work order display 402 and populate the display 402 with information about the work order. In the example depicted in FIG. 4, the work order display 402 comprises a work order identifier 414 that uniquely identifies the selected work order 310, a section 408 that displays general information about the work order 310 (e.g. the open or closed status, a type of maintenance to be performed, a priority, an identity of the asset on which the maintenance task is to be performed, a suggested completion date for the maintenance, a name of a project with which the maintenance task is associated, etc.), and a navigation bar 406 comprising selectable controls corresponding to respective different categories of additional information that can be viewed.

In the illustrated example, the user has selected the General category from the navigation bar 406, which causes the work order display 402 to render a Summary box 404 containing summary information about the maintenance task, including a description of the asset performance issue or risk to be mitigated by the maintenance task, relevant key observations about the asset, risk information for the asset (e.g., a daily average risk score or a risk level), or other such information. The display 402 also renders an Instructions box 410 that displays instructions for performing the maintenance task, and a section 412 that displays miscellaneous additional information (e.g., identities of the technicians assigned to perform the maintenance task, an estimated number of hours for performing the task, the actual number of hours that were required to perform the tasks, or other such information.

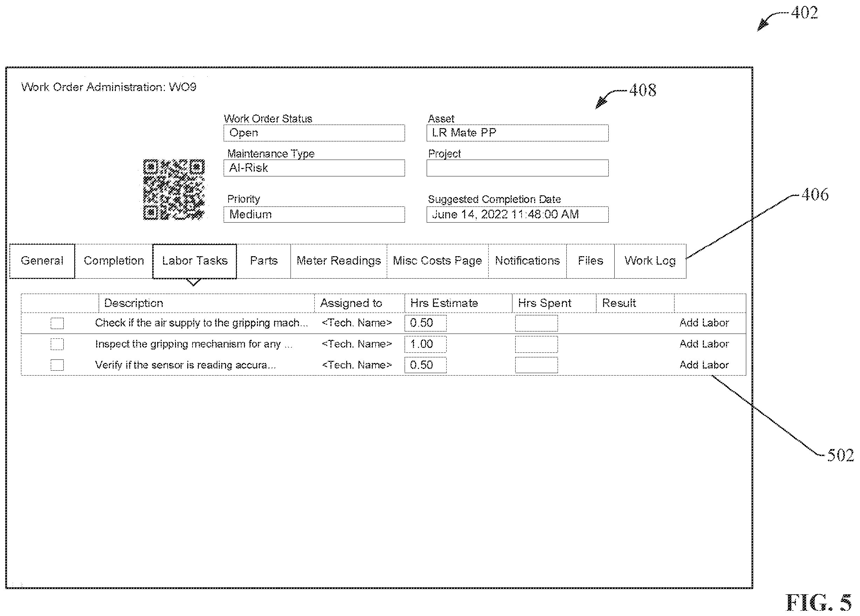

FIG. 5 is another example view of the work order display 402 in which the user has selected the Labor Tasks category from the navigation bar 406, which causes the display 402 to render the individual maintenance tasks defined by the work order 310 as a formatted list 502. Each entry of the list 502 represents a task to be performed, and includes a description of the task, an identity of a maintenance technician to whom the task is assigned, fields for the estimated and actual number of hours spent on the task, a result of the task, and an interactive checkbox control for indicating that the task has been completed.

Returning to FIG. 3, to facilitate intelligent automated generation of work orders 310, the monitoring component 208 is assisted by an analysis component 212 that can apply one or more types of analysis (e.g., AI, generative AI analysis or generative AI-assisted analysis, machine learning, etc.) to real-time or historical asset data 306, MES data 316 from the plant facility's MES system or another high-level plant managements system, and other contextual data in connection with determining when to schedule maintenance tasks, what these maintenance tasks entail, and which technicians are to be assigned the tasks. For example, in some embodiments, the analysis component 212 can leverage generative AI to auto-generate work orders 310 or otherwise schedule maintenance tasks based on predicted or detected asset risks. In such embodiments, the analysis component 212 can implement prompt engineering functionality using associated trained models 312 trained with various types of training data, and can use these prompt engineering features to interface with a generative AT model 308 (e.g., an LLM or another type of model) and associated neural networks.

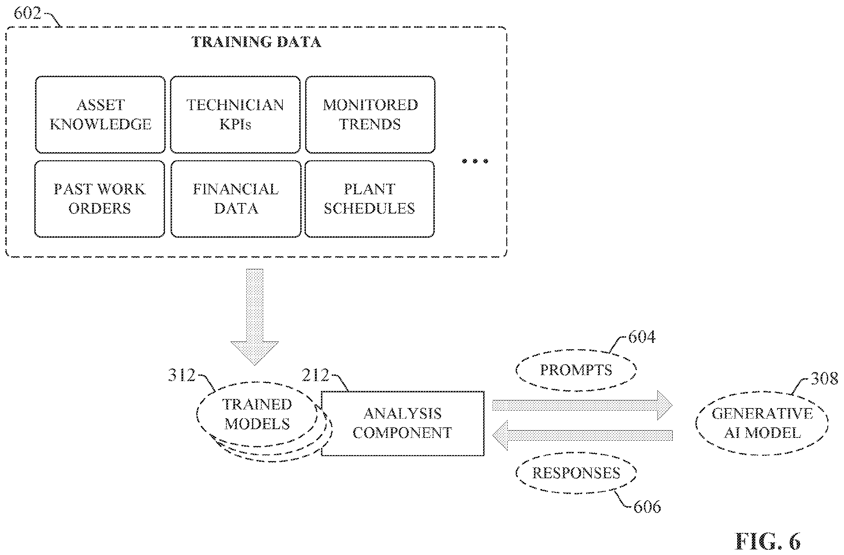

FIG. 6 is a diagram illustrating training of the models 312 used by some embodiments of the analysis component 212. Models 312 can be trained using training data 602 relevant to identification or prediction of risks to the plant facility's industrial assets, scheduling of suitable maintenance tasks for mitigating the risks, and assignment of those maintenance tasks to suitable technicians. Such training data 602 can include, but is not limited to, knowledge or technical specifications of industrial assets, machines, and devices that are in service within the industrial facility; information from past or closed work orders 310; monitored trends in asset operation (e.g., histories and frequencies of asset failure); information about technicians employed by the plant facility (e.g., employee identities, skill sets, work histories relative to specific assets or types of maintenance tasks, work schedules etc.); financial data for the plant facility; or other such data 602.

The monitoring component 208 and analysis component 212 can detect a current asset risk condition (or predict a future asset risk condition) that requires scheduling of a maintenance task and generation of a corresponding work order 310 based on analysis of real-time or historical asset data 306 as well as content of the trained models 312. In some scenarios, this analysis can be performed without accessing the generative AI model 308. However, the analysis component 212 can also, as needed, interact with the generative AI model 308 as part of the risk detection analysis, or as part of the work order generation process. For example, as the work order management system 202 is monitoring asset data 306 for risk conditions, the analysis component 212 can determine whether a given subset of the asset data 306 generated by an industrial asset or related groups of assets is indicative of a risk condition based on knowledge of the relevant industrial assets (e.g., values of performance indicators known or inferred to correlate with a risk condition for those specific assets, the nature of the risk condition indicated by anomalous values of those performance indicators, lifecycle information for the assets, etc.), and this asset knowledge can be obtained from technical asset information encoded in the trained models 312 as part of training data 602 or can be prompted from the generative AI model 308 using suitable prompts 604 generated by the analysis component 212.

Similarly, when an asset risk is detected, the analysis component 212 can determine a suitable set of maintenance tasks for mitigating the detected or predicted risk based on the training data 602 encoded in the models 312, as well as responses 606 prompted from the generative AI model 308. Responses 606 prompted from the generative AI model 308 can also be used by the work order generation component 210 to generate natural language content to be included in the corresponding work order 310 (e.g., natural language descriptions of the asset risk rendered in the Summary box 404 of the work order display 402, natural language descriptions of the maintenance tasks rendered in the Instructions box 410 or list 502, etc.).

In the scenarios described above, the analysis component 212 may prompt the generative AI model 308 for supplemental information in response to determining that additional information from the generative AI model 308 would yield an analytic result having a higher probable level of accuracy relative to relying solely on the asset data 306 and trained models 312 alone. To support generative AI-assisted generation and scheduling of work orders 310, the analysis component 212 can be configured with custom prompt engineering capabilities designed to prompt the generative AI model 308 for supplemental information that can be used by the work order management system 202 to recognize industrial asset risk conditions, infer suitable corrective maintenance tasks for mitigating asset-specific risks, and generate content of a work order 310 for the maintenance tasks.

Returning to FIG. 6, during the asset monitoring process, the analysis component 212 can formulate and submits prompts 604 to the generative AI model 308 designed to obtain responses 606 that can assist with monitoring the performance of industrial assets for risk conditions, formulating maintenance strategies for mitigating the risk conditions, or generating content of a work order 310. The analysis component 212 can generate these prompts 604 based on a current operating context of one or more industrial assets being monitored (as determined from real-time or historical asset data 306) as well as the training data 602 encoded in the trained models 312. The analysis component 212 can reference the trained models 312 or associated training data 602 as needed in connection with creating prompts 604 designed to obtain responses 606 from the generative AI model 308 that assist the analysis component 212 in recognizing a current or predicted risk to an industrial asset, formulating a maintenance intervention for mitigating the risk, or generating content of a work order 310 for scheduling the maintenance intervention (e.g., natural language summaries of the identified asset risk, as well as descriptions of the maintenance tasks for mitigating the risk). The analysis component 212 can generate the prompt 604 to include any relevant information that can assist the generative AI model 308 in converging on a useful responses 606 that can be used to better understand a current context of the industrial assets, including but not limited to a selected subset of the asset data itself 306, an identity of the type of industrial asset of interest (e.g., a type of machine or industrial device), an indication of the type of industrial process or application being carried out by the industrial asset of interest (e.g., a specific type of batch processing, a specific automotive manufacturing function, a sheet metal stamping application, etc.), any selected subsets of the training data 602 or MES data 316, or other such data.

Returning to FIG. 3, when assessing when and how to schedule a maintenance task intended to mitigate asset risk, the analysis component 212 can factor the cost of operator or maintenance time, scheduled plant downtimes, environmental sensing (e.g., humidity or other environmental conditions), time of year, supplier issues, and other considerations. Some of this supplemental or contextual information can be retrieved by the work order management system 202 from an external system that stores the relevant information, such as an MES system that monitors and manages operations on the control level of the customer's industrial enterprise in view of higher-level business considerations. For example, information regarding technicians' work schedules and hourly rates, operating schedules for respective automation systems within the plant facility (including planned machine or plant shutdowns), and other such information can be retrieved by the system's MES interface component 214 as MES data 316 from the plant's MES system.

Also, the work order management system 202 can reference information about the industrial assets in use within the plant facility, and the functional or geographic relationships between these assets, in connection with determining when to schedule maintenance activities. In some embodiments, this information can be maintained in a plant model 314 that defines industrial machines, systems or assets within the plant facility as well as the functional and/or geographical relationships between those assets. For example, the plant model 314 may define the relative locations of respective machines or automation systems within the plant, functional relationships between the machines (e.g., interdependencies between the machines or systems, such as indications of which automation systems are responsible for providing material or parts to other downstream systems), or other such asset information.

The work order management system 202 can consider any of the information from the trained models 312 or their associated training data 602 (e.g., technical information about industrial assets, technician skill sets, previous work orders, plant financial data, plant schedules, etc.), MES data 316 (which may include some of the training data 602 described above), prompted responses 606 from the generative AI model 308, or the plant model 314 in connection with determining whether a maintenance task should be scheduled for an industrial asset, when the task should be scheduled, and to which technicians the task should be assigned. For example, when the monitoring component 208 or analysis component 212 detect or predict, based on analysis of asset data 306, a risk condition requiring a maintenance action, the analysis component 212 can determine whether deferring the maintenance action until an upcoming planned machine shutdown would minimize a cost of the maintenance without incurring a cost associated with the risk, and if so, generate the work order 310 for the maintenance action such that corresponding maintenance tasks are scheduled to be performed during the shutdown period. To make this decision, the analysis component 212 can consider the machine's operating or shutdown schedule (as determined from the MES data 316), the cost of technicians' time during the shut down versus the cost of the technicians' time during the machine's scheduled operation, a cost associated with prolonging the asset risk until the shutdown relative to the cost of mitigating the risk sooner, or other such factors.

The interdependencies between industrial assets defined in the plant model 314 can be used by the analysis component 212 to identify opportunities for opportunistic maintenance scheduling, which can improve maintenance efficiency. For example, when the work order generation component 210 schedules a maintenance activity (and generates a corresponding work order 310) for a given industrial asset to mitigate a discovered risk, the analysis component 212 can also determine whether the discovered risk is likely to also affect other similar machines or components (as determined in part based on the assets defined in the plant model 314) and schedule work orders 310 to perform similar maintenance tasks on those similar assets. The analysis component 212 can also determine whether other assets that are downstream from the affected asset are likely to be impacted by the discovered risk, or by the maintenance action performed on the affected upstream asset. If so, the analysis component 212 can instruct the work order generation component 210 to include, as part of the maintenance instructions defined in the work order 310 for the affected asset, recommendations for addressing any related issues on the downstream assets. In another example, when a machine shutdown is scheduled to address a discovered high-risk issue, the analysis component 212 can identify other lower-risk issues that could also be addressed during the machine shutdown, and generate work orders 310 to address these lower-risk issues as part of the same maintenance session. In any of these examples, the analysis component 212 can reference the defined interdependencies between industrial machines or assets defined in the plant model 314 in order to identify other assets that may be affected by a machine risk (e.g., assets that are downstream from, or otherwise have a functional relationship with, the affected asset), similar assets that may be subject to a common risk, etc.

In some embodiments, the analysis component 212 can schedule and assign a work order 310 for a discovered asset risk based in part on a risk-reward assessment that considers the benefit of performing the work order against the risk to the affected asset. For example, machines that are especially crucial to plant operations may require the result of the analysis component's risk-reward assessment to exceed a higher benefit threshold, relative to less crucial machines, to justify any risks associated with performing the maintenance action on the machine (e.g., lost productivity or risk of damage due to improper execution of the work order).

In some embodiments, the analysis component 212 can be configured to initiate generation of proactive or reactive work orders 310 based on analysis of signatures or trends in the measured data received from specific sensors on the plant floor. For example, the analysis component 212 can monitor selected subsets of the asset data 306 for specific sensor signatures (e.g., machine or component vibration trends measured by vibration sensors), indicative of a possible future asset failure, and in response to detection of such sensor signatures, instruct the work order generation component 210 to generate a work order 310 for a preventative maintenance task that is predicted to mitigate the risk of the asset failure. The analysis component 212 can determine the maintenance actions to be performed based on previously performed tasks that successfully addressed the failure in other instances, as determined based on analysis of closed or past work orders 310 (e.g., by determining actions in previous work orders 310 that were performed to bring the asset back to normal state when the risk of this failure had occurred in the past). This approach can also be used to generate work orders 310 for maintenance tasks predicted to extend machine life, rather than just preventing or addressing asset failure.

The work order management system 202 can also schedule work orders 310 for prescriptive maintenance based on learned trends in monitored asset data 306 over time, or based on trends discovered in data from closed or past work orders 310. For example, the senor signatures for a given industrial asset indicative of possible future failure of that asset, as discussed above, may be learned by the analysis component 212 over time by monitoring of the asset's sensor data over time (e.g., vibration data, temperature data, pressure data, flow data, position data, speed or acceleration data, etc.) and learning correlations between the behavior of the asset's sensor data and failures of the asset. This analysis may also learn ranges of normal or expected values of sensor values or performance metrics of the asset during normal operation of the asset (e.g., expected value ranges for an oven temperature, a tank pressure, a flow rate, etc.). In some cases, the analysis may determine that the health of a given asset is a function of whether concurrent values of multiple sensor measurements are within a learned holistic value space.

Once these sensor signatures or learned ranges of normal performance parameter values are established, the analysis component 212 can monitor the relevant sets of sensor data (or controller data tags) for the learned data signatures that were determined to correlate with asset failure, and initiate generation of appropriate work orders 310 in response to detecting these signatures in the asset data 306. In another example, the analysis component 212 can determine, based on analysis of data contained in closed work orders 310, that a certain machine component or device has been failing at regular or semi-regular intervals for an excessive amount of time (e.g., in excess of a threshold duration). Based on this determination, the analysis component 212 can initiate generation of a work order 310 to schedule replacement of the component or device.

As in previous examples, the analysis component 212 can leverage generative AI as needed to assist in determining whether values or trends in the monitored asset data 306 indicate, or are correlated with, an elevated risk of failure of an asset. For example, during monitoring of the asset data 306, the analysis component 212 may generate prompts 604 directed to the generative AT model 308 that are designed to obtain responses 606 (see FIG. 6) providing technical information about an asset whose performance or behavior is deviating from normal parameters, and can reference the information in these responses 606 in connection with determining whether a maintenance action should be performed on the asset, determining what this maintenance action should entail, and populating the content of a new work order 310 for performing this maintenance action.

Some embodiments of the work order management system 202 can also mine maintenance history of an asset or performance issue in connection with generating work orders 310. For example, if the analysis component 212 detects a performance problem on an industrial asset and determines that this performance problem is similar to a subset of previous problems in the asset's history, the analysis component 212 can instruct the work order generation component 210 to generate a work order 310 based on inferred root cause of the issue and past solutions that were recorded as being successful in addressing the issue (as determined from analysis of closed or past work orders 310). This information can also be used to identify the most common problems associated with machines (including OEM machines).

In addition to generating work orders 310 to perform reactive maintenance in response to detection of a current or predicted asset risk condition, the work order management system 202 can also generate work orders 310 for scheduled proactive maintenance actions designed to prolong an industrial asset's lifecycle or to proactively prevent asset failures or performance inefficiencies. These proactive maintenance actions can include, for example, oil changes, inspection routines, proactive replacement of parts at regular intervals, or other such scheduled maintenance tasks. The system 202 can generate and schedule these proactive work orders 310 at regular or semi-regular intervals according to a defined frequency at which the maintenance is to be conducted. To improve or optimize the efficiency of these schedule maintenance activities, some embodiments of the analysis component 212 can perform risk-versus-reward analyses on the results of this maintenance together with the amount of time and labor spent performing the maintenance (e.g., a statistical analysis of the benefit of this scheduled maintenance). Based on a result of this analysis, the analysis component 212 can determine whether a given scheduled maintenance task is being over-prescribed or under-prescribed, and can dynamically adjust the frequency this schedule maintenance task based on assessments of the results of these maintenance activities.

For example, if the analysis component 212 determines that a daily scheduled inspection of a machine rarely finds actionable problems on the machine (e.g., problems are only discovered for a percentage of inspections below a threshold percentage), the analysis component 212 can instruct the work order generation component 210 to reduce the frequency of these scheduled inspections in order to reduce wasted time and labor. Alternatively, the analysis component 212 may instruct the work order generation component 210 to increase the frequency of the scheduled inspections if an outlier problem is detected during a most recent inspection.

In some embodiments, the analysis component 212 can also consider the cumulative runtime of the asset or the asset's lifecycle when determining a suitable frequency at which to scheduling preventative maintenance. For example, it may be known that certain failure risks, such as discovery of manufacturing defects, are higher early in the asset's lifecycle, while others are more common nearer to the end of the asset's lifecycle. The analysis component 2121 can adjust the frequency of preventative maintenance on such assets based on these considerations.

As in previous examples, the analysis component 212 can leverage generative AT as needed in connection with performing these types of risk-versus reward analyses on the results of scheduled maintenance activities. For example, the analysis component 212 can generate prompts 604 designed to obtain responses 606 from the generative AI model 308 that can assist in optimizing a frequency of a specific type of scheduled maintenance performed on a given industrial asset (e.g., technical specifications for the asset, recommendations for types of preventative maintenance to perform on the asset and a frequency for performing these maintenance tasks, etc.).

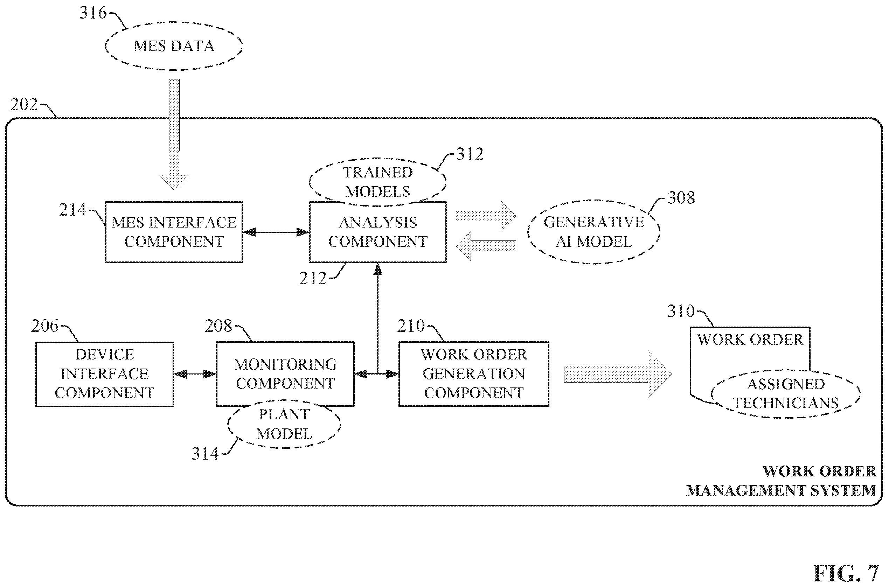

When generating a work order 310 for a maintenance task (e.g., based on the performance monitoring techniques described above), the analysis component 212 can also select one or more technicians or maintenance personnel to whom the work order 310 will be assigned, and the work order generation component 210 can generate the work order 310 to include information specifying the selected technicians and update corresponding employee work schedules within the system 202. FIG. 7 is a diagram illustrating generation and assignment of a work order 310 to one or more selected technicians by the work order management system 202. When assigning a work order 310 to one or more technicians, the analysis component 212 can consider the relative competencies and schedules of the technicians employed by the plant facility. In an example scenario, the analysis component 212 can initially estimate a number of technicians required to perform the maintenance tasks defined by the work order 310, or a number of technicians that satisfies an overall maintenance efficiency criterion. The analysis component 212 can then select specific technicians from among the technicians registered as employees (or contractors) of the plant facility to fill the selected number of personnel, and assign the work order 310 to those technicians. The analysis component 212 can assign maintenance tasks defined in the work order 310 to one or more selected technicians based on a determination that the technicians' skill sets or past experiences are suitable for carrying out the defined maintenance tasks.

To assist with this work order assignment analysis, the analysis component 212 can reference relevant subsets of the plant facility's MES data 316 that identify the technicians associated with the plant facility as well as the respective technicians' work schedules and skill sets. For example, if the MES system maintains information regarding the roles and availability schedules of plant personnel, the MES interface component 214 can retrieve this information as MES data 316, and the analysis component 212 can analyze this data 316 to determine identities of technicians who are qualified to attend to the maintenance task and whose schedules indicate that the technicians are available to work on the task within the time frame defined by the work order 310. In general, the analysis component 212 can match the work order's maintenance tasks to a selected subset of technicians based on best fit criteria that considers the technicians' relative levels of experience or skill in performing the maintenance tasks, relevant skill sets, work schedules, availability bandwidths, or other factors (some or all of which can be obtained from the plant's MES system as MES data 316).

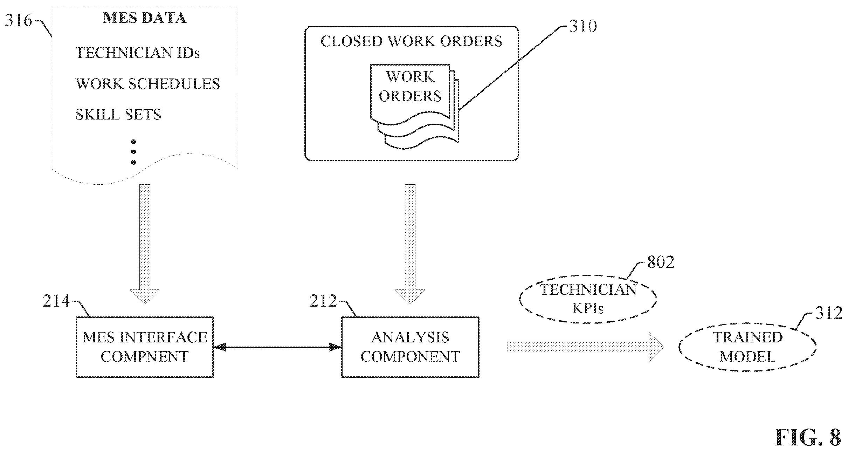

In some embodiments, the analysis component 212 can track technician key performance indicators (KPIs) for each technician and use these technician KPIs to determine maintenance task assignments. FIG. 8 is a diagram illustrating tracking of technician KPIs 802. In general, a technician's KPIs 802 can represent quantitative measures of the technician's range of skill sets, experience in performing certain types of maintenance tasks or working on specific types of industrial assets, and past levels of success in performing various types of maintenance tasks. In some embodiments, multiple different technician KPIs 802 can be generated and tracked for each technician, with each KPI 802 representing a measure of a specific type of skill or experience (e.g., a level of controller programming experience, a level of industrial robot teaching or programming experience, a level of past success in carrying out a specific type of asset maintenance, etc.). Technician KPIs 802 can also include indications of the technicians' availabilities to perform maintenance tasks.

The analysis component 212 can generate and tracks each technician's KPIs 802 based on MES data 316 obtained from the plant's MES system (or another high-level business or management system used by the plant) by the MES interface component 214, including the identities of the technicians registered to perform maintenance within the facility, the work schedules of those technicians, information regarding the technician's skill sets (e.g., certifications, training, technical roles, etc.), or other such information. Additionally, for each technician, the analysis component 212 can monitor the content of closed or past work orders 310 that had been assigned to the technician to determine the degrees of experience the technician has had in performing various types of maintenance or working on specific machines or assets (e.g., replacing specific types of parts or machine components, recovering a specified machine from a downtime conditions, cleaning, inspections, etc.), translate these degrees of experience to corresponding KPI values indicating the technician's relative degrees of experience in these maintenance tasks, and assign these KPI values to the technician.

In the illustrated example, the technician KPIs 802 generated by the analysis component 212 are integrated into the trained models 312 (e.g., as part of training data 602 illustrated in FIG. 6). However, in some embodiments, the technician KPIs 802 may be stored separately from the models 312 (if such models 312 are used) and referenced as needed by the analysis component 212 to assist in determining a suitable assignment of technicians to a work order 310 being generated.

Using technician KPIs 802 or other metrics of respective technicians' skill sets and levels of maintenance experiences, the analysis component 212 can assess which technicians perform best on certain types of maintenance jobs and assign work orders 310 accordingly. If it is known that a work order 310 being generated by the work order generation component 210 requires certain specific skills (PLC programming, robot path teaching, etc.), the analysis component 212 can instruct the work order generation component 210 to assign the work order 310 to a technician having the necessary skills and experience. In some embodiments, the analysis component 212 can also determine whether a work order 310 in the process of being generated carries a level of risk that exceeds a defined threshold (e.g., due to the relative importance of the affected asset and the expected loss in productivity if the maintenance is not performed correctly, or due to a higher safety risk associated with the work order 310), and if so, assign the work order 310 to a technician whose KPIs 801 indicate a relatively high level of experience, or to a higher number of technicians than would typically be assigned in order to reduce the risk to high-value assets.

In some embodiments, the analysis component 212 can also analyze technician KPIs 802 when a new work order 310 is in the process of being generated to identify opportunities for training technicians with lower degrees of experience. For example, when the work order generation component 210 is in the process of generating a new work order 310 for a maintenance task (e.g., using any of the automated work order generation techniques described above), the analysis component 212 can assign the work order 310 to a technician determined to have the relevant experience and skill to perform the task (as determined based on the technician KPIs 802 or MES data 316) and can also assign a less experienced technician who has not yet developed the relevant skills to work alongside the more experience technician in carrying out the work order 310, thereby performing work order scheduling in a manner designed to facilitate sharing of expertise and training of inexperienced technicians.

The analysis component 212 can also consider expected degrees of difficulty when scheduling and assigning work orders 310. For example, the analysis component can determine a relative degree of difficulty associated with a work order 310 being generated and, if the degree of difficulty exceeds a threshold, schedule the work order's maintenance tasks to be spread over different days to reduce the amount of daily effort required to complete the work order 310. When determining the degree of difficulty associated with a work order 310, the analysis component 212 can consider the experience level of the technicians assigned to the work order 310 (e.g., as determined from the technician KPIs 802). The analysis component 212 may also divide tasks of a work order 310 among different technicians based on the technicians' current or expected locations relative to the affected asset (which can be determined based in part on asset layout or location information defined in the plant model 314), skill levels relative to each task defined by the work order 310, etc.

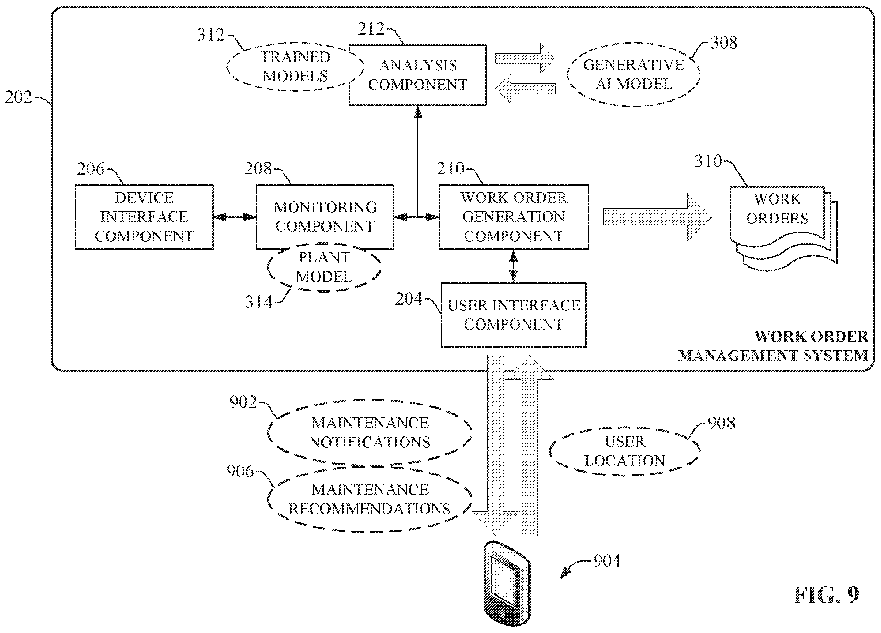

In some embodiments, the work order management system 202 can deliver notifications to relevant plant personnel when a new work order 310 is generated and scheduled, alerting those employees that the new work order 310 has been created. FIG. 9 is a diagram illustrating delivery of maintenance notifications 902 to a technician's client device 904. In response to creation of a work order 310 using any of the techniques described above, the user interface component 204 can deliver a notification 902 to the client devices 904 of technicians whom the analysis component 212 or the work order generation component 210 have designated to carry out the work order 310. The notification 902 can include any of the information described above as being rendered on the work order displays 402 illustrated in FIGs. 4 and 5, including a description of the work to be performed (e.g., a list of maintenance tasks as rendered in the Instructions box 410), the industrial asset or machine on which the maintenance is to be performed, a time at which the maintenance is scheduled, the identities of other technicians who have been assigned the work order 310, or other such information. Once created, the work order 310 can be managed through its lifecycle within the domain of the work order management system 202. This can include updating the status of the work order 310 within the system 202 as the work order's maintenance tasks are performed and ultimately closing the work order 310 upon completion of the maintenance tasks. At any time, authorized users can invoke the work order display 402 on their client devices 904 via the user interface component 204 to view detailed information about the work order 310, as well as status information for the respective maintenance tasks defined in the work order 310.

In some embodiments, the analysis component 212 can also identify an opportunity for a technician who has already been assigned to a work order 310 to perform another scheduled maintenance task during his or her walk back from the job site after completing the work order 310, and send maintenance recommendation 906 to the technician's client device 904 identifying the additional task to be performed. Also, in some embodiments, information collected by a technician during walk-back can also be analyzed by the analysis component 212 to detect other previously unknown issues, and the work order generation component 210 can generate work orders 310 to address these issues and assign these new work orders to technicians using the assignment techniques described above.

Some embodiments of the system 202 can also schedule maintenance tasks opportunistically based on geo-positioning. For example, industrial assets within the industrial facility can be geo-tagged such that the locations of the respective assets within the facility are recorded by the system 202. As a technician traverses the facility, the technician's client device 904 or another user location tracking device can provide user location data 908 indicating the technician's current location to the work order management system 202. If the monitoring component 208 determines that the technician's current location (as determined from the user location data 908) is within a defined distance from an industrial asset for which a work order 310 is currently open (or if the monitoring component 208 determines that the technician's current trajectory is predicted to bring the technician within the defined distance from the asset), the user interface component can deliver a maintenance notification 902 to the technician's client device 904 notifying the technician of the open work order 310 for the asset, thereby proactively alerting the technician of an opportunity to perform the corresponding maintenance tasks on the asset while the technician is in the vicinity of the asset. In some such embodiments, the user interface component 204 can also display information about the asset, including relevant subsets of asset data 306 collected from the asset, on the client device 904 to assist the technician in determining the current state of the asset, eliminating the need for scannable tags to invoke data. As a condition for alerting the technician of the opportunistic maintenance task, the monitoring component 208 can also determine whether the technician's skill sets or technician KPIS 802 indicate that the technician is qualified to carry out the required maintenance task. Thus, the system 202 considers both the technician's location and skill when determining whether to alert the technician of the opportunistic maintenance task.

In addition to automated, AI-assisted generation and management of work orders 310, some embodiments of the analysis component 212 can also apply statistical and machine learning analytics to both open and closed work orders 310 to identify problems and abnormalities that could impact manufacturing and maintenance operations. In an example embodiment, the analysis component 212 can apply algorithms to learn normal maintenance behaviors or characteristics for different types of maintenance tasks and to flag abnormal maintenance behaviors that deviate significantly from normal maintenance procedures. Based on this analysis, embodiments of the work order management system 202 can identify unnecessarily costly maintenance procedures or practices, as well as predict asset failures and offer enterprise-specific recommendations 906 intended to reduce machine downtime and optimize the maintenance process.

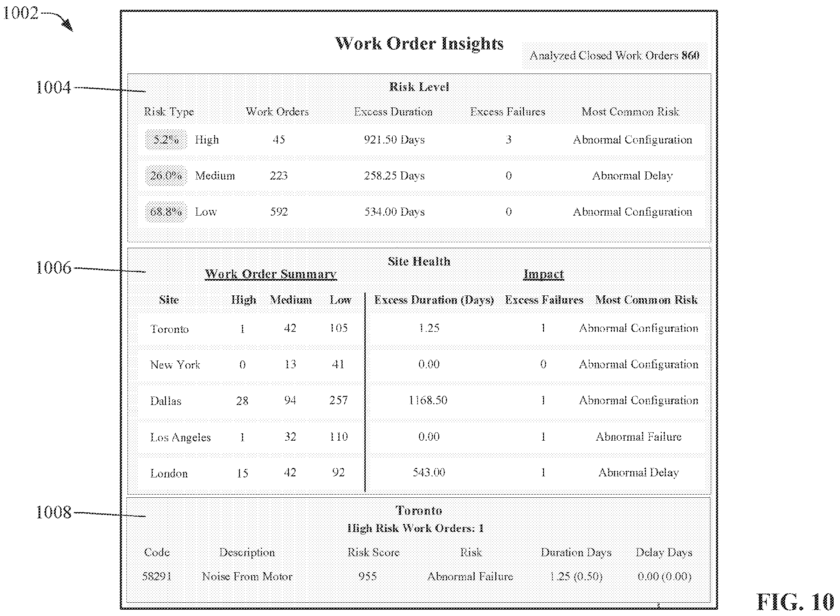

The work order management system 202 can render work order reports that display the results of this work order analysis via suitable interface displays generated by the user interface component 204. FIG. 10 is an example interface display 1002 that can be generated by user interface component 204 to render work order analysis results on a client device according to one or more embodiments. This example interface display 1002 includes a Risk Level section 1004, a Site Health section 1006, and a Site Detail section 1008.

The Risk Level section 1004 summarizes work order performance for a specified period of time (e.g., the past week, the past day, the past month, etc.). In the illustrated example, Risk Level section 1004 categorizes the examined work orders 310 into three risk types - low risk, medium risk, and high risk - based on the degree to which performance of the work orders deviated from expected or typical performance. The categorization of a work order as being a low, medium, or high risk is determined based on the value of an anomaly score calculated by the system 202 for that work order. In an example implementation, work orders 310 having anomaly scores between 0 and 0.33 may be categorized as low risk, work orders 310 having anomaly scores between 0.34 and 0.66 may be categorized as medium risk, and work orders 310 having anomaly scores between 0.67 and 1 may be categorized as high risk. Under the *Work Orders* column, Risk Level section 1004 can display the total number of work orders that have been assigned to each of the three risk levels. This offers viewers a high-level summary of how many maintenance jobs were performed in a manner that deviated from expectations for those types of jobs, and the degree to which the work orders 310 were different from expected performance in one or more particulars (e.g., time spent on the job, number of personnel who worked on the job, materials or parts used on the job, etc.).

Under the *Excess Duration* column, the Risk Level section 1004 can also display, for each risk level, a total excess duration associated with the work orders 310 in that risk level. This excess duration value represents the estimated amount of excess time spent performing the maintenance operations due to the deviations in the way the maintenance operations were performed. In the illustrated example, the system 202 has calculated that the 46 high risk work orders have cost an additional 921.50 days of maintenance time due to their deviations from expected performance. In some embodiments, the analysis component 212 can calculate these excess duration values based on the values of the *Spent Hours* fields of the work orders in each risk category relative to learned expected values of the *Spent Hours* fields of non-anomalous work orders for the same type of maintenance operation. The *Excess Duration* values provide a metric of how much the high-risk work orders are costing in terms of excess maintenance time or, stated differently, the amount of maintenance time that can be saved if the performance issues that cause the high-risk work orders 310 are addressed and resolved.

Under the *Excess Failures* column, the Risk Level section 1004 displays, for each risk category, a number of excess asset failures that could have been avoided if maintenance tasks had been performed differently. In some embodiments, the number of excess asset failures can be determined by one or both of a statistical analysis of individual work order clusters or machine learning analysis applied to a holistic set of work orders. For example, machine learning algorithms applied by the analysis component 212 may identify a work order 310 for correcting a downtime event of a particular machine, where the downtime event may be attributable to a previous maintenance action performed on the machine that was not performed optimally. In this regard, the machine learning algorithms can learn correlations between anomalous work orders 310 for repairing the machine - where the anomalous work orders 310 are found to have been performed in a manner that deviates from learned expected performance of the maintenance task - and subsequent work orders 310 for correcting downtime events of the machine that may not have occurred if the anomalous work order had been performed according to standard. In general, the number of excess failures represents the number of asset failures that may be attributable to non-compliant or non-standard maintenance performance.

Under the *Most Common Risk* column, the Risk Level section 1004 indicates, for each risk category, the most common risk identified among the group of work orders 310 within that risk category. In some cases, the most common risk for a given risk category may correspond to the work order feature that is found to deviate the most often among the group of work orders within that risk category. In other cases, the most common risk may be interpreted by the system 202 based on a combination of work order features that are found to frequently deviate from expectations. Example risks that can be indicated in this column can include, but are not limited to, abnormal delays, abnormal configurations, abnormal work durations, abnormal delays, or other such causes of risk.

Information displayed in the Site Health section 1006 of interface display 1002 may be similar to that displayed in the Risk Level section 1004, but is segregated according to site or facility. In the example depicted in FIG. 10, the Site Health section 1006 depicts work order risk information for five different facilities (Toronto, New York, Dallas, Los Angeles, and London). For each site, the Site Health section 1006 displays the number of work orders 310 in each risk category, the excess duration and failures caused by non-compliant work order performance, and the most common risk that contributes to anomalous work orders. Organizing work order insight information in this site-specific manner can readily convey which facilities of an industrial enterprise are performing maintenance tasks poorly or in a non-compliant manner, and which sites are carrying out maintenance tasks in a low-risk, low-cost manner.

Interacting with display 1002 to select a site or facility in the Site Health section 1006 can cause the high-risk work orders 310 for the selected site to be listed in the site detail section 1008 of the interface display. In the illustrated example, the Toronto site has been selected, causing information about that site's single high-risk work order to be displayed in section 1008. For each high-risk work order 310, section 1008 displays the work order number or code, the description of the work order 310 (obtained from the work order's *Description* field), a risk score for the work order 310, the type of risk that the system 202 has identified for the work order 310 (e.g., abnormal asset failure, abnormal delay, abnormal duration, abnormal configuration, etc.), the duration of the work order 310, and the delay associated with the work order 310. Section 1008 can display the duration and delay associated with the work order 310 together with the expected duration and delay for similar types of work orders 310, as determined based on the statistical and/or machine learning analysis performed by the system 202 on other work orders 310 for similar types of maintenance.

The risk score assigned to a high-risk work order 310 is a key performance indicator (KPI) indicating how different the work order 310 is from other work orders 310 for similar types of maintenance. In this example, the risk score has a range between 0 and 1000, with 1000 indicating the maximum degree of deviation. The risk scores can be used to prioritize which maintenance procedures at each facility should be reviewed and corrected to obtain the most benefit in terms of asset performance and maintenance costs.

The interface display 1002 depicted in FIG. 10 is only intended to be exemplary, and it is to be appreciated that results of the work order analyses described above can be rendered in any suitable format without departing from the scope of one or more embodiments of this disclosure.

The insights gleaned by embodiments of the work order management system 202 can afford maintenance and manufacturing personnel the ability to find areas of their operations that are underperforming or overperforming. The system 202 can also identify root causes or recommend paths to resolving maintenance inefficiencies identified by the statistical and machine learning analysis applied to past work orders 310. This allows maintenance teams to improve their processes and ultimately reduce maintenance or manufacturing costs. The work order management system 202 can also regularly re-evaluate the work orders 310 as new work orders 310 are submitted, completed, and closed, so that the algorithms used to generate risk scores and recommended countermeasures are regularly updated with new training data.

In addition to displaying machine risk information, as in the case of display 1002 depicted in FIG. 10, some embodiments of the user interface component 204 can also render predictive maintenance recommendations formulated by the analysis component 212. In such embodiments, the analysis component 212 can be configured to translate the risk information generated and rendered on display 1002 into prescriptive maintenance recommendations or inspection tasks for mitigating asset risk, and the user interface component 204 can render these recommendations on display 1002 or another interface display rendered on the user's client device.

The analysis component 212 can formulate recommendations for addressing a discovered asset risk based on such factors as the nature of the risk; the type of industrial asset, device, or process that is subject to the risk (e.g., a sheet metal stamping press, a mixer, a conveyor, a die cast machine, an industrial controller, a motor drive, etc.); a function of the industrial asset within the plant's operations and/or the asset's relationship with other assets (as determined, for example, based on information in the plant model 314 about the organization of the plant's assets); technical information about the asset (as obtained, for example, from the training data 602 or from responses 606 prompted from the generative AT model 308 by the analysis component 212); or other such information. In some embodiments, the analysis component 212 can formulate the language of these risk-mitigation recommendations with the assistance of generative AI model 308, and display these natural language recommendations on display 1002 or another interface display. The analysis component 212 can also proactively generate work orders 310 to perform the recommended risk-mitigation actions upon discovery of these asset risks, populating the work orders 310 with information about the recommended maintenance tasks (which can be generated with the assistance of the generative AI model 308).

As part of the risk analysis described above, some embodiments of the system 202 can also identify the highest risk assets from among those registered in the system 202 and calculate a financial cost to each of these asset risks (or to failure to mitigate the risks) to assist in prioritizing risk mitigation tasks. The analysis component 212 can calculate these financial costs, determine a prioritization of maintenance tasks that factors these calculated costs, and render (via user interface component 204) a recommended order for performing the maintenance tasks based on this prioritization. This prioritization can then be rendered on a client device via an interface display (e.g., display 1002 or another interface), or the analysis component 212 can schedule corresponding work orders 310 for the risk mitigation tasks in accordance with this prioritization.

In some embodiments, the work order management system 202 can also make recommendations regarding how to spend available capital on maintenance projects. For example, based on the risk analysis described above, as well as analysis of financial data included in the training data 602 (or obtained from the MES system as MES data 316), the analysis component 212 can determine an available amount of capital that can be spent on maintenance activities (e.g., end of year capital), and identify top maintenance investments on which to spend this capital based on analysis of work order history or estimated benefits of implementing the maintenance recommendations.

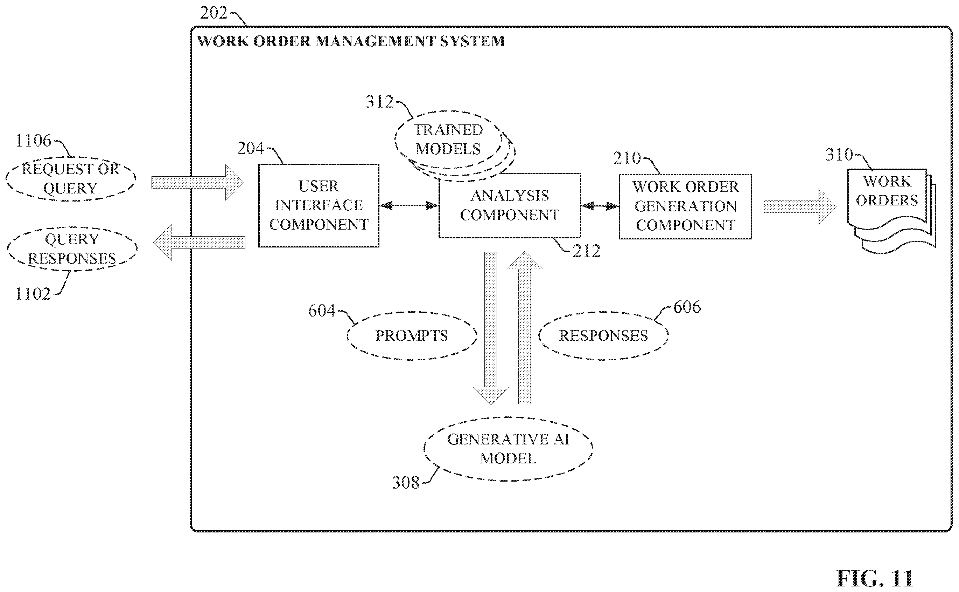

Some embodiments of the work order management system 202 can also incorporate a generative AI chat interface that allows a user to interact with the system 202 via natural language chat exchanges. In such embodiments, the system 202 can support industry-specific prompt engineering features that can formulate suitable prompts 604 for submission to the generative AI model 308 based on a user's natural language requests or queries. FIG. 11 is a diagram illustrating exchange of generative AI dialog messages between a user and the work order management system 202. Embodiments of the system 202 that support a generative AI-based chat interactions can render (via user interface component 204) a chat interface through which a user can exchange natural language prompts or chat conversations with the system 202. This chat interface can include a data entry field for entering a user's natural language request or query 1106 as a text string, or can support other input formats for a user's request or query 1106 (e.g., spoken-word audio input).

In general, the work order management system 202 can receive and process a user's natural language requests or queries 1106, which can comprise questions about existing open or closed work orders 310, questions about asset risks, requests to create new work orders 310 for performing maintenance tasks, or other such prompts. The system 202 can use prompt engineering services to process natural language requests or queries 1106 submitted by the user via the chat interface (or via a spoken word interface). These prompt engineering services can leverage knowledge encoded in the trained modules 312 (as learned from training data 602), together with responses 606 prompted from the generative AI model 308, to accurately ascertain the user's needs and respond to the user's request or query 1106.

When a user submits a natural language request or query 1106 to the system 202, the analysis component 212 can analyze the query 1106 based on any of the training data 602 encoded in the trained models 312 (e.g., technical specifics of the industrial assets in service within the plant facility, current or predicted statuses of those assets, knowledge of technicians' skill sets and work schedules, past work order data, plant operating schedules, etc.) as well as information defined in the plant model 314 about the layout or organization of industrial assets within the plant. Based on this analysis, and depending on the nature of the request or query 1106, the analysis component 212 generates and returns a natural language response 1102 to the query 1106 (e.g., an answer to a question about a work order 310 being viewed, an answer to a question about asset risk information rendered on display 1002, a recommendation regarding prioritization of maintenance tasks or work orders 310 in response to a request for such a recommendation, etc.). Example queries 1106 for which the analysis component 212 can generate responses 1102 can include, but are not limited to, questions regarding statuses of open work orders 310, questions regarding the plant's most urgent asset risks, requests to identify the plant's most common asset risks, or other such queries 1106. The analysis component 212 can also instruct the work order generation component 210 to generate and schedule work orders 310 in accordance with a user's natural language request specifying the requirements of the work order 310, or to modify details of an existing work order 310 in accordance with the user's natural language requests or queries 1106 (e.g., requesting a reassignment of a work order 310 to a different technician, changing a scheduled time or due date assigned to a work order 310, appending additional maintenance tasks to an existing work order 310, etc.).

In addition to referencing the information contained in the trained models 312 or plant model 314, the analysis component 212 can also, as needed, prompt the generative AI model 308 for responses 606 that assist in generating suitable responses 1102 or work orders 310 in response to the user's natural language request or query 1106. For example, in response to receipt of a natural language request or query 1106, the analysis component 212 can determine whether a sufficiently accurate response 1102 to the query 1106 (or a work order 310 satisfying the user's maintenance scheduling request) can be generated based on relevant information contained in the trained models 312 alone, or, alternatively, whether supplemental information from the generative AI model 308 is necessary to formulate a response 1102 having a sufficiently high probability of satisfying the user's request or query 1106 (or to generate a work order 310 having a sufficiently high probability of satisfying the request conveyed in the query 1106). If supplemental information from the generative AI model 308 is deemed necessary, the analysis component 212 can formulate prompts 604 based on analysis of the request or query 1106 and the knowledge encoded in any of the trained models 312 or plant model 314. These prompts 604 are designed to obtain responses 606 from the generative AI model 308 that can be used to formulate accurate and cohesive responses 1102 to the user's query 1106, or to generate work orders 310 that satisfy the user's natural language request.

For example, in the case of formulating responses 1102 to a user's question about an asset risk rendered on display 1002 (see FIG. 10), the analysis component 212 can aggregate information from the trained models 312 (or selected subsets of training data 602) determined to be relevant to the query (e.g., technical specifications for assets, information from open or closed work orders 310, results of the risk analysis discussed above in connection with FIG. 10, etc.) with language-specific compositional or syntax information obtained as responses 606 from the generative AI model 308 to formulate a natural language response 1102 to the user's query 1106.

In another example scenario, a user wishing to generate a work order 310 for carrying out a specific maintenance task, or who has a question about an existing work order 310, can submit an initial natural language request or query 1 106 that broadly defines the maintenance task to be scheduled or the information being requested. In the case of generating a work order 310 using generative AI, the initial request can specify the asset of interest, a type of maintenance to be performed, a technician to be assigned to the maintenance, or other such information. For queries regarding a work order 310, the initial query 1106 may specify information that can assist the system 202 in identifying the work order 310 and the nature of the information requested. The analysis component 212 can parse this initial request or query 1106 to determine the type of information or service being requested, and refine and contextualize the initial query 1106 in a manner expected to assist the trained models 312 and the generative AI model 308 to accurately generate a suitable work order 310 or a response 1102 to the user's question. If the analysis component 212 determines that additional information from the user would yield a response having a higher probability of satisfying the user's initial request, the analysis component 212 can formulate and render one or more query responses 1102 that prompt the user for more refined information that will allow the analysis component 212 to more accurately respond to the user's request. Through iterations of such chat exchanges, the analysis component 212 can collaborate with the user in exploring potential response variations likely to satisfy the user's needs.

The analysis component 212 can use a range of approaches for processing a natural language request or query 1106 submitted by the user, and for formulating prompts 604 to the generative AI model 308 designed to yield responses 606 that assist in responding to the user's request or query 1106. According to an example approach, the analysis component 212 can access an archive of chat exchanges between the analysis component 212 and other users and identify chat sessions that were initiated by user queries having similarities to the initial query 1106 submitted by the present user. Upon identifying these archived chat sessions, the analysis component 212 can analyze these past chat sessions to determine types of information that were ultimately generated as a result of these sessions (e.g., work orders 310 having features or elements that are a function of specific keywords of the user's query, a specific type of information about a work order 310 or set of work orders 310 that was ultimately determined to be sought by the user, etc.), and either generate an output (e.g., a work order 310 or a natural language response 1102 to the user's query 1106) based on the outcomes of these past chat sessions and adapted to the user's initial request or query 1 106, or, if necessary, generate a prompt 604 for submission to the generative AI model 308 designed to obtain a response 606 comprising the necessary type of information.

Analysis of these archived chat sessions, as well as any other relevant customer-specific knowledge or expertise encoded in the trained models 312, can also assist the analysis component 212 in inferring the user's needs from an initially vaguely worded request or query 1106, and to generate a response 1102 addressing these needs. If supplemental information from the generative AI model 308 is deemed necessary to formulate a response 1102 having a sufficiently high probability of satisfying the user's request or query 1106 (or to generate work orders 310 having a sufficiently high probability of satisfying the user's design request), the analysis component 212 can also formulate a prompt 604 designed to prompt the generative AI model 308 for at least a portion of the information inferred to be of interest to the user. This may include, for example, formulating the prompt 604 to request, from the generative AI model 308, information that may not have been specified in the user's request or query 1106 but which the analysis component 212 ascertained to be necessary to accurately respond to the request or query 1106 (e.g., information required to formulate a work order 310 requested by the user, or information to be included in the response 1102 to the user's query 1106). In this way, the analysis component 212 and its associated trained models 312 can actively frame a user's natural language request or query 1106 in a manner that quickly and accurately leads the generative AI model 308 to the user's desired results.

In another example approach, the analysis component 212 can enhance the user's query 1106 with additional information from the trained models 312 (or the training data 602 used to train the models 312) that contextualizes the user's request, and integrate this additional information with the user's query 1106 to yield the prompt 604 submitted to the generative AI model 308. The types of additional contextual information added to the query 1106 can depend on the nature of the query 1106 and can include, but are not limited to, technical information about an industrial asset known to be relevant to the user's query 1106, information about past maintenance tasks as obtained from closed work orders 310, information regarding monitored operational trends in the asset of interest, or other such information.

These generative AI-assisted techniques can allow technicians to easily generate work orders 310 using natural language text or verbal input to the system 202 (e.g., via interfaces rendered on the technicians' client devices and delivered by the user interface component 204) as the technicians are performing other tasks (e.g., upon discovering a new maintenance concern during investigation of a known issue). These approaches can also be used to easily and intuitively annotate or edit work orders using natural language voice or text input.

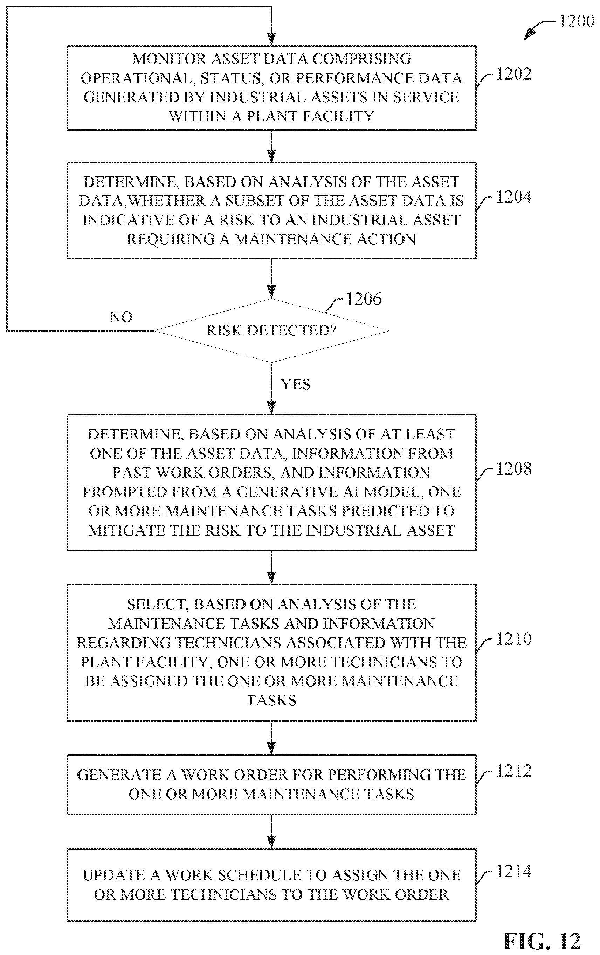

FIGs. 12-13 illustrate example methodologies in accordance with one or more embodiments of the subject application. While, for purposes of simplicity of explanation, the methodologies shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 12 illustrates an example methodology 1200 for generating work orders in response to a detected risk to an industrial asset. Initially, at 1202, asset data comprising operational, status, or performance data generated by industrial assets in service within a plant facility is monitored. The asset data can be collected from data tags or automation objects defined on an industrial controller, sensors, telemetry devices, or other industrial devices that monitor or control automation systems in which the industrial assets are used. The data represents operational, status, or health information measured for the automation system, and may comprise telemetry values obtained from meters or sensors, status information read from sensors or smart devices (e.g., variable frequency drives), or other such data. The data may be collected by a gateway device that reads the data from the industrial devices and sends the data to a work order management system for monitoring and processing.

At 1204, a determination is made as to whether a subset of the asset data monitored at step 1202 is indicative of a risk to an industrial asset requiring a maintenance action. In this regard, the work order management system that performs the asset data monitoring can be configured to recognize when one or more of the monitored data values fall outside an expected range suggestive of normal operation of the automation system, or when trends in the monitored data are indicative of a predicted asset failure or performance problem that requires investigation or correction by maintenance personnel. In some embodiments, the system can make this determination based on an analysis of the asset data together with models trained with asset- and plant-specific training data. This training data can include, but is not limited to, knowledge or technical specifications of industrial assets, machines, and devices that are in service within the industrial facility; information from past or closed work orders for maintenance performed on the assets; monitored trends in asset operation (e.g., histories and frequencies of asset failure); information about technicians employed by the plant facility (e.g., employee identities, skill sets, work histories relative to specific assets or types of maintenance tasks, work schedules etc.); financial data for the plant facility; or other such training data.

Also, in some embodiments the system can leverage generative AI in connection with determining whether values or trends in the asset data are indicative of a current or future asset failure or performance issue. For example, as the asset data is being monitored, the system can generate and submit prompts to a generative AI model that are designed to obtain responses from the generative AI model that can assist in determining whether an industrial asset's performance data is indicative of a current or predicted failure or performance degradation. The system can use the content of the generative AI model's responses in connection with determining whether the asset's data is indicative of a risk. When formulating such prompts, the system can include any relevant information in the prompt that can assist the generative AI model in generating relevant and useful responses that can be used to improve the accuracy of the risk detection, including but not limited to a selected subset of the monitored asset data itself, an identity of the type of industrial asset of interest or the type of industrial process or application being carried out by the industrial asset, or other such data.

At 1206, a determination is made as to the a risk is detected based on the monitoring and determination steps 1202 and 1202. If no risk is detected (NO at step 1206, the methodology returns to step 1202 and the monitoring continues. If an asset risk is detected (YES at step 1206), the methodology proceeds to step 1208, where the system determines or formulates one or more maintenance tasks that are predicted to mitigate the detected risk. This determination can be based on an analysis of at least one of the asset data itself, information from past work orders (such as past work orders for maintenance that was performed on the asset experiencing the risk conditions), and information prompted from the generative AI model. As in the previous step, the system can generate prompts for submission to the generative AI model that are designed to obtain responses that can be used to infer suitable maintenance tasks having a high probability of addressing the asset risk detected at step 1206.

At 1210, the system selects one or more technicians to be assigned the one or more maintenance tasks based on analysis of the maintenance tasks determined at step 1208 and information regarding the set of technicians associated with the plant facility. The information about the technicians can comprise, for example, identities of the technicians registered to perform maintenance within the facility, the work schedules of those technicians, information regarding the technician's skill sets, or other such information. The system can also generate information about technicians' levels of experience in addressing various types of maintenance tasks (or levels of experience in working on a specific asset within the plant) based on analysis of closed or past work orders that had been assigned to the respective technicians and assign maintenance tasks to selected technicians based on this information regarding the technicians' relative levels of relevant work experience.

At 1212, a work order for performing the one or more maintenance tasks determined at step 1208 is generated by the system. In some embodiments, the system can generate content of the work order (e.g., descriptions of the discovered asset risk detected at step 1206 as well as the maintenance tasks determined at step 1208 for mitigating the risks) based on information obtained or analyzed in previous steps, and can also generate a portion of the content with the assistance of the generative AI model. At 1214, the work order management system updates a work schedule to assign the one or more technicians selected at step 1210 to the work order.

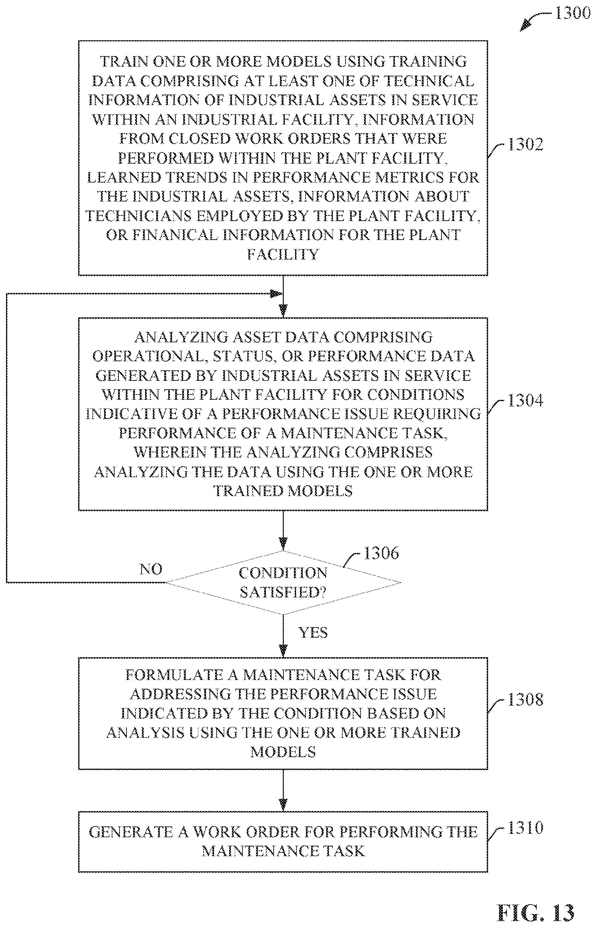

FIG. 13 illustrates an example methodology 1300 for using trained models to detect actionable risk conditions in industrial assets and to generate work orders to address these risk conditions. Initially, at 1302, one or more models are trained using training data comprising at least one of technical information for industrial assets that are in service within an industrial facility, information from closed work orders that were performed within the plant facility on the industrial assets, learned trends in performance metrics for the industrial assets, information about technicians employed by the industrial facility, or financial information for the plant facility.

At 1304, asset data comprising operational, status, or performance data generated by industrial assets in service within the plant facility are analyzed for conditions indicative of a performance issue requiring performance of a maintenance task, where this analysis is performed using the one or more models trained at step 1302. In some embodiments, this analysis of the asset data can leverage generative AI to assist in determining whether values or trends in the monitored asset data are indicative of an actionable performance problem. For example, the system performing the analysis can formulate prompts directed to a generative AI model that are designed to obtain responses that can assist the system in interpreting values or trends in the asset data and determining whether these values or trends are indicative of a current or predicted performance concern in any of the monitored industrial assets.

At 1306, a determination is made, based on the analysis at step 1304, as to whether the condition indicative of the performance issue is satisfied. If the condition is not satisfied (NO at step 1306), the methodology returns to step 13045 and the analysis continues. Alternatively, if the condition is satisfied (YES at step 1306), the methodology proceeds to step 1308, where a maintenance task for addressing the detected performance issues is formulated based on analysis using the one or more trained models. In some embodiments, the formulation of the maintenance task can be assisted using generative AT; e.g., by formulating and submitting prompts to a generative AI model that are designed to yield responses that can assist in identifying suitable maintenance tasks having a high probability of mitigating the detected risks. At 1310, a work order for performing the maintenance task formulated at step 1308 is generated. At least some of the content of the work order, such as the description of the detected maintenance concern and the description of the maintenance task, can be generated with the assistance of the generative AI model.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMT) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

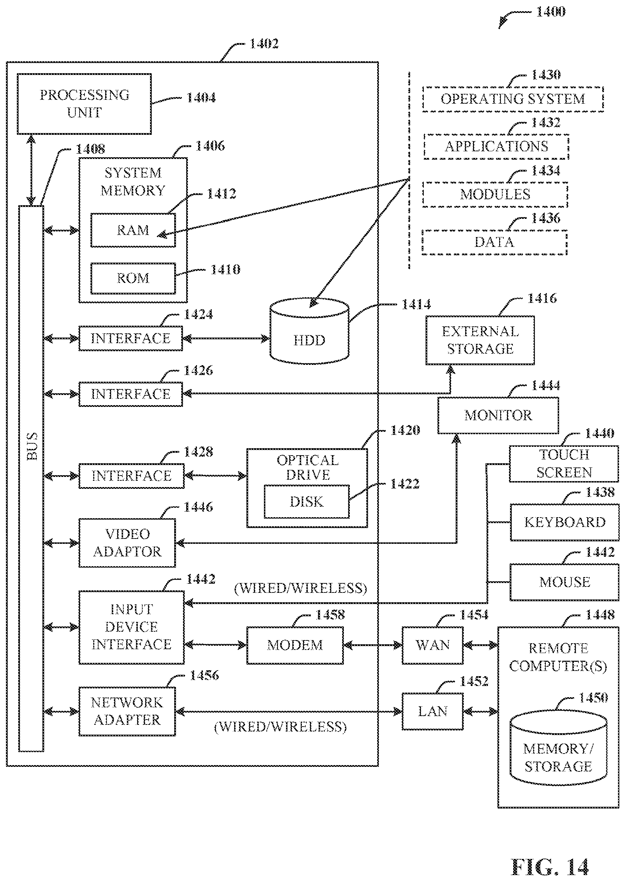

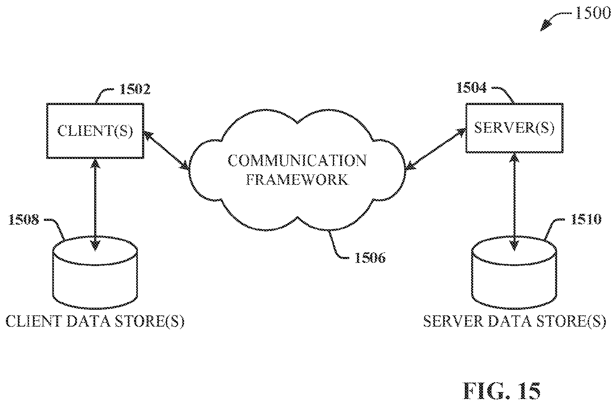

In order to provide a context for the various aspects of the disclosed subject matter, FIGs. 14 and 15 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 14 the example environment 1400 for implementing various embodiments of the aspects described herein includes a computer 1402, the computer 1402 including a processing unit 1404, a system memory 1406 and a system bus 1408. The system bus 1408 couples system components including, but not limited to, the system memory 1406 to the processing unit 1404. The processing unit 1404 can be any of various commercially available processors. Dual microprocessors and other multi-processor architectures can also be employed as the processing unit 1404.

The system bus 1408 can be any of several types of bus structure that can further interconnect to a memory bus (with or without a memory controller), a peripheral bus, and a local bus using any of a variety of commercially available bus architectures. The system memory 1406 includes ROM 1410 and RAM 1412. A basic input/output system (BIOS) can be stored in a non-volatile memory such as ROM, erasable programmable read only memory (EPROM), EEPROM, which BIOS contains the basic routines that help to transfer information between elements within the computer 1402, such as during startup. The RAM 1412 can also include a highspeed RAM such as static RAM for caching data.

The computer 1402 further includes an internal hard disk drive (HDD) 1414 (e.g., EIDE, SATA), one or more external storage devices 1416 (e.g., a magnetic floppy disk drive (FDD) 1416, a memory stick or flash drive reader, a memory card reader, etc.) and an optical disk drive 1420 (e.g., which can read or write from a CD-ROM disc, a DVD, a BD, etc.). While the internal HDD 1414 is illustrated as located within the computer 1402, the internal HDD 1414 can also be configured for external use in a suitable chassis (not shown). Additionally, while not shown in environment 1400, a solid state drive (SSD) could be used in addition to, or in place of, an HDD 1414. The HDD 1414, external storage device(s) 1416 and optical disk drive 1420 can be connected to the system bus 1408 by an HDD interface 1424, an external storage interface 1426 and an optical drive interface 1428, respectively. The interface 1424 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1402, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1412, including an operating system 1430, one or more application programs 1432, other program modules 1434 and program data 1436. All or portions of the operating system, applications, modules, and/or data can also be cached in the RAM 1412. The systems and methods described herein can be implemented utilizing various commercially available operating systems or combinations of operating systems.

Computer 1402 can optionally comprise emulation technologies. For example, a hypervisor (not shown) or other intermediary can emulate a hardware environment for operating system 1430, and the emulated hardware can optionally be different from the hardware illustrated in FIG. 14. In such an embodiment, operating system 1430 can comprise one virtual machine (VM) of multiple VMs hosted at computer 1402. Furthermore, operating system 1430 can provide runtime environments, such as the Java runtime environment or the .NET framework, for application programs 1432. Runtime environments are consistent execution environments that allow application programs 1432 to run on any operating system that includes the runtime environment. Similarly, operating system 1430 can support containers, and application programs 1432 can be in the form of containers, which are lightweight, standalone, executable packages of software that include, e.g., code, runtime, system tools, system libraries and settings for an application.

Further, computer 1402 can be enable with a security module, such as a trusted processing module (TPM). For instance with a TPM, boot components hash next in time boot components, and wait for a match of results to secured values, before loading a next boot component. This process can take place at any layer in the code execution stack of computer 1402, e.g., applied at the application execution level or at the operating system (OS) kernel level, thereby enabling security at any level of code execution.

A user can enter commands and information into the computer 1402 through one or more wired/wireless input devices, e.g., a keyboard 1438, a touch screen 1440, and a pointing device, such as a mouse 1442. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1404 through an input device interface 1444 that can be coupled to the system bus 1408, but can be connected by other interfaces, such as a parallel port, an IEEE 1394 serial port, a game port, a USB port, an IR interface, a BLUETOOTH^{®} interface, etc.

A monitor 1444 or other type of display device can be also connected to the system bus 1408 via an interface, such as a video adapter 1446. In addition to the monitor 1444, a computer typically includes other peripheral output devices (not shown), such as speakers, printers, etc.

The computer 1402 can operate in a networked environment using logical connections via wired and/or wireless communications to one or more remote computers, such as a remote computer(s) 1448. The remote computer(s) 1448 can be a workstation, a server computer, a router, a personal computer, portable computer, microprocessor-based entertainment appliance, a peer device or other common network node, and typically includes many or all of the elements described relative to the computer 1402, although, for purposes of brevity, only a memory/storage device 1450 is illustrated. The logical connections depicted include wired/wireless connectivity to a local area network (LAN) 1452 and/or larger networks, e.g., a wide area network (WAN) 1454. Such LAN and WAN networking environments are commonplace in offices and companies, and facilitate enterprise-wide computer networks, such as intranets, all of which can connect to a global communications network, e.g., the Internet.

When used in a LAN networking environment, the computer 1402 can be connected to the local network 1452 through a wired and/or wireless communication network interface or adapter 1456. The adapter 1456 can facilitate wired or wireless communication to the LAN 1452, which can also include a wireless access point (AP) disposed thereon for communicating with the adapter 1456 in a wireless mode.

When used in a WAN networking environment, the computer 1402 can include a modem 1458 or can be connected to a communications server on the WAN 1454 via other means for establishing communications over the WAN 1454, such as by way of the Internet. The modem 1458, which can be internal or external and a wired or wireless device, can be connected to the system bus 1408 via the input device interface 1442. In a networked environment, program modules depicted relative to the computer 1402 or portions thereof, can be stored in the remote memory/storage device 1450. It will be appreciated that the network connections shown are example and other means of establishing a communications link between the computers can be used.

When used in either a LAN or WAN networking environment, the computer 1402 can access cloud storage systems or other network-based storage systems in addition to, or in place of, external storage devices 1416 as described above. Generally, a connection between the computer 1402 and a cloud storage system can be established over a LAN 1452 or WAN 1454 e.g., by the adapter 1456 or modem 1458, respectively. Upon connecting the computer 1402 to an associated cloud storage system, the external storage interface 1426 can, with the aid of the adapter 1456 and/or modem 1458, manage storage provided by the cloud storage system as it would other types of external storage. For instance, the external storage interface 1426 can be configured to provide access to cloud storage sources as if those sources were physically connected to the computer 1402.

The computer 1402 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 15 is a schematic block diagram of a sample computing environment 1500 with which the disclosed subject matter can interact. The sample computing environment 1500 includes one or more client(s) 1502. The client(s) 1502 can be hardware and/or software (e.g., threads, processes, computing devices). The sample computing environment 1500 also includes one or more server(s) 1504. The server(s) 1504 can also be hardware and/or software (e.g., threads, processes, computing devices). The servers 1504 can house threads to perform transformations by employing one or more embodiments as described herein, for example. One possible communication between a client 1502 and servers 1504 can be in the form of a data packet adapted to be transmitted between two or more computer processes. The sample computing environment 1500 includes a communication framework 1506 that can be employed to facilitate communications between the client(s) 1502 and the server(s) 1504. The client(s) 1502 are operably connected to one or more client data store(s) 1508 that can be employed to store information local to the client(s) 1502. Similarly, the server(s) 1504 are operably connected to one or more server data store(s) 1510 that can be employed to store information local to the servers 1504.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).
**The following is a list of further preferred embodiments of the invention:**
Embodiment 1. A system, comprising:
   a memory that stores executable components; and
   a processor, operatively coupled to the memory, that executes the executable components, the executable components comprising:
      a monitoring component configured to monitor industrial asset data generated by industrial assets in service within an industrial facility, wherein the industrial asset data comprises operational and status information for the industrial assets;
      an analysis component configured to, in response to a determination, based on analysis of the industrial asset data, that a subset of the industrial asset data satisfies a condition indicative of a current or predicted risk to a first industrial asset of the industrial assets,
         formulate one or more first maintenance tasks predicted to mitigate the current or predicted risk,
         identify, based on defined interdependencies between the industrial assets, a second industrial asset of the industrial assets having a likelihood of experiencing a performance issue due to the current or predicted risk to the first industrial asset, and
         formulate one or more second maintenance tasks predicted to mitigate the performance issue; and
      a work order generation component configured to, in response to the determination by the analysis component that the subset of the industrial data satisfies the condition, generate a work order prescribing the one or more first maintenance tasks and the one or more second maintenance tasks.
Embodiment 2. The system of embodiment 1, wherein the analysis component is configured to, as part of the analysis, generate a prompt, directed to a generative artificial intelligence (AI) model, designed to obtain a response from the generative AI model that is used by the analysis component to determine whether the subset of the industrial asset data satisfies the condition.
Embodiment 3. The system of embodiment 2, wherein
   the response from the generative AI model is a first response, and
   the analysis component is further configured to formulate the one or more first maintenance tasks or the one or more second maintenance tasks based on second responses prompted from the generative AI model.
Embodiment 4. The system of embodiment 1, wherein the analysis component is further configured to determine whether the subset of the industrial asset data satisfies the condition based on a model trained with training data comprising at least one of technical specification data for the industrial assets, information from past work orders that were generated for the industrial assets, historical operational or status data for the industrial assets, information about technicians employed by the plant facility, or financial data for the plant facility.
Embodiment 5. The system of embodiment 1, wherein the analysis component is further configured to formulate the one or more first maintenance tasks or the one or more second maintenance tasks based on content of a plant model that defines the industrial assets in service within the plant facility, functional relationships between the industrial assets, and geographical relationships between the industrial assets.
Embodiment 6. The system of embodiment 1, wherein
   the analysis component is further configured to select one or more technicians, from a set of technicians registered as being employed by the plant facility, to perform the one or more maintenance tasks, and
   the work order generation component is configured to generate the work order to define a designation of the one or more first maintenance tasks or the one or more second maintenance tasks to the one or more technicians.
Embodiment 7. The system of embodiment 6, wherein the analysis component is configured to
   reference technician key performance indicator (KPI) data that defines, for respective technicians of the set of technicians, the technicians' levels of training or experience in different types of maintenance activities, and
   select the one or more technicians based on a determination that the technician KPI data indicates that the one or more technicians have a level of training or experience in performing the one or more first maintenance tasks or the one or more second maintenance tasks that satisfies a defined criterion.
Embodiment 8. The system of embodiment 7, wherein the analysis component is further configured to generate the technician KPI data based on at least one of information regarding the respective technicians' level of training on types of maintenance activities or industrial assets, information regarding the respective technicians' certifications, or analysis of closed work orders for maintenance activities performed by the respective technicians.
Embodiment 9. The system of embodiment 1, wherein the analysis component is configured to learn the condition indicative of the current or predicted risk based on analysis of trends in the industrial asset data over time.
Embodiment 10. The system of embodiment 1, further comprising a user interface configured to render content of the work order generated by the work order generation component, wherein the content comprises at least one of a description of the current or predicted risk, descriptions of the one or more first maintenance tasks and the one or more second maintenance tasks, identities of one or more technicians assigned to the work order, a status of the work order, a priority of the work order, or an identity of the industrial asset.
Embodiment 11. The system of embodiment 10, wherein
   the user interface is further configured to render a chat interface configured to receive a natural language request or query directed to the work order, wherein the natural language request or query comprises at least one of a question about the work order, a request to append or edit the work order, a request change an assignment of technicians to the work order, or a request to change a due date for the work order, and
   the analysis component is configured to generate a natural language response to the request or query or to implement the request or query using a generative artificial intelligence (AI) model.
Embodiment 12. The system of embodiment 1, wherein
   the monitoring component is further configured to monitor a location of a user having a technician role, and
   the executable components further comprise a user interface component configured to, in response to a determination by the monitoring component that the location is within a defined distance from an industrial asset, of the industrial assets, for which an open work order is pending, send a notification of the open work order to a personal device associated with the user.
Embodiment 13. A method, comprising:
   monitoring, by a system comprising a processor, industrial asset data generated by industrial assets that are in service within an industrial facility, wherein the industrial asset data comprises operational and status information for the industrial assets; and
   in response to determining, based on analysis of the industrial asset data, that a subset of the industrial asset data satisfies a condition indicative of a current or predicted risk to a first industrial asset of the industrial assets:
      determining, by the system, one or more first maintenance tasks predicted to mitigate the current or predicted risk;
      identifying, by the system based on defined interdependencies between the industrial assets, a second industrial asset of the industrial assets having a likelihood of experiencing a performance issue due to the current or predicted risk to the first industrial asset;
      determining, by the system, one or more second maintenance tasks predicted to mitigate the performance issue; and
      generating, by the system, a work order prescribing the one or more first maintenance tasks and the one or more second maintenance tasks.
Embodiment 14. The method of embodiment 13, wherein the analysis comprises generating a prompt, directed to a generative artificial intelligence (AI) model, designed to cause the generative AI model to generate a response that is processed to determine whether the subset of the industrial asset data satisfies the condition.
Embodiment 15. The method of embodiment 14, wherein
   the response from the generative AI model is a first response, and
   the determining of the one or more first maintenance tasks or the one or more second maintenance tasks is based on second responses prompted from the generative AI model.
Embodiment 16. The method of embodiment 14, further comprising determining whether the subset of the industrial asset data satisfies the condition based on content of a model trained with training data, wherein the training data comprises at least one of technical specification data for the industrial assets, information from past work orders that were generated for the industrial assets, historical operational or status data for the industrial assets, information about technicians employed by the plant facility, or financial data for the plant facility.
Embodiment 17. The method of embodiment 13, further comprising selecting, by the system, one or more technicians, from a set of technicians registered as being employed by the plant facility, to perform the one or more first maintenance tasks or the one or more second maintenance tasks,
   wherein the generating of the work order comprises designating the one or more first maintenance tasks or the one or more second maintenance tasks to the one or more technicians.
Embodiment 18. The method of embodiment 17, wherein the selecting comprises:
   referencing technician key performance indicator (KPI) data that defines, for respective technicians of the set of technicians, the technicians' levels of training or experience in different types of maintenance activities, and
   selecting the one or more technicians based on a determination that the technician KPI data indicates that the one or more technicians have a level of training or experience in performing the one or more first maintenance tasks or the one or more second maintenance tasks that satisfies a defined criterion.
Embodiment 19. A non-transitory computer-readable medium having stored thereon instructions that, in response to execution, cause a work order management system comprising a processor to perform operations, the operations comprising:
   monitoring industrial asset data generated by industrial assets that are in service within an industrial facility, wherein the industrial asset data comprises operational and status information for the industrial assets;
   in response to determining, based on analysis of the industrial asset data, that a subset of the industrial asset data satisfies a condition indicative of a current or predicted risk to an industrial asset of the industrial assets:
      formulating one or more first maintenance tasks predicted to mitigate the current or predicted risk;
      identifying, based on defined interdependencies between the industrial assets, a second industrial asset of the industrial assets having a likelihood of experiencing a performance issue due to the current or predicted risk to the first industrial asset;
      formulating one or more second maintenance tasks predicted to mitigate the performance issue; and
      generating a work order prescribing the one or more first maintenance tasks and the one or more second maintenance tasks.
Embodiment 20. The non-transitory computer-readable medium of embodiment 19, further comprising determining that the subset of the industrial asset data satisfies the condition based on content of a model trained with training data, wherein the training data comprises at least one of technical specification data for the industrial assets, information from past work orders that were generated for the industrial assets, historical operational or status data for the industrial assets, information about technicians employed by the plant facility, or financial data for the plant facility.

## Claims

1. A system, comprising:
a memory that stores executable components; and
a processor, operatively coupled to the memory, that executes the executable components, the executable components comprising:
a monitoring component configured to monitor industrial asset data generated by industrial assets in service within an industrial facility, wherein the industrial asset data comprises operational and status information for the industrial assets;
an analysis component configured to, in response to a determination, based on analysis of the industrial asset data, that a subset of the industrial asset data satisfies a condition indicative of a current or predicted risk to a first industrial asset of the industrial assets,
formulate one or more first maintenance tasks predicted to mitigate the current or predicted risk,
identify, based on defined interdependencies between the industrial assets, a second industrial asset of the industrial assets having a likelihood of experiencing a performance issue due to the current or predicted risk to the first industrial asset, and
formulate one or more second maintenance tasks predicted to mitigate the performance issue; and
a work order generation component configured to, in response to the determination by the analysis component that the subset of the industrial data satisfies the condition, generate a work order prescribing the one or more first maintenance tasks and the one or more second maintenance tasks.

2. The system of claim 1, wherein the analysis component is configured to, as part of the analysis, generate a prompt, directed to a generative artificial intelligence (AI) model, designed to obtain a response from the generative AI model that is used by the analysis component to determine whether the subset of the industrial asset data satisfies the condition,
preferably wherein
the response from the generative AI model is a first response, and
the analysis component is further configured to formulate the one or more first maintenance tasks or the one or more second maintenance tasks based on second responses prompted from the generative Al model.

3. The system of claim 1 or 2, at least one of:
wherein the analysis component is further configured to determine whether the subset of the industrial asset data satisfies the condition based on a model trained with training data comprising at least one of technical specification data for the industrial assets, information from past work orders that were generated for the industrial assets, historical operational or status data for the industrial assets, information about technicians employed by the plant facility, or financial data for the plant facility; and
wherein the analysis component is further configured to formulate the one or more first maintenance tasks or the one or more second maintenance tasks based on content of a plant model that defines the industrial assets in service within the plant facility, functional relationships between the industrial assets, and geographical relationships between the industrial assets.

4. The system of one of claims 1 to 3, wherein
the analysis component is further configured to select one or more technicians, from a set of technicians registered as being employed by the plant facility, to perform the one or more maintenance tasks, and
the work order generation component is configured to generate the work order to define a designation of the one or more first maintenance tasks or the one or more second maintenance tasks to the one or more technicians.

5. The system of claim 4, wherein the analysis component is configured to
reference technician key performance indicator (KPI) data that defines, for respective technicians of the set of technicians, the technicians' levels of training or experience in different types of maintenance activities, and
select the one or more technicians based on a determination that the technician KPI data indicates that the one or more technicians have a level of training or experience in performing the one or more first maintenance tasks or the one or more second maintenance tasks that satisfies a defined criterion.

6. The system of claim 5, wherein the analysis component is further configured to generate the technician KPI data based on at least one of information regarding the respective technicians' level of training on types of maintenance activities or industrial assets, information regarding the respective technicians' certifications, or analysis of closed work orders for maintenance activities performed by the respective technicians.

7. The system of one of claims 1 to 6, at least one of:
wherein the analysis component is configured to learn the condition indicative of the current or predicted risk based on analysis of trends in the industrial asset data over time; and wherein
the monitoring component is further configured to monitor a location of a user having a technician role, and
the executable components further comprise a user interface component configured to, in response to a determination by the monitoring component that the location is within a defined distance from an industrial asset, of the industrial assets, for which an open work order is pending, send a notification of the open work order to a personal device associated with the user.

8. The system of one of claims 1 to 7, further comprising a user interface configured to render content of the work order generated by the work order generation component, wherein the content comprises at least one of a description of the current or predicted risk, descriptions of the one or more first maintenance tasks and the one or more second maintenance tasks, identities of one or more technicians assigned to the work order, a status of the work order, a priority of the work order, or an identity of the industrial asset.

9. The system of claim 8, wherein
the user interface is further configured to render a chat interface configured to receive a natural language request or query directed to the work order, wherein the natural language request or query comprises at least one of a question about the work order, a request to append or edit the work order, a request change an assignment of technicians to the work order, or a request to change a due date for the work order, and
the analysis component is configured to generate a natural language response to the request or query or to implement the request or query using a generative artificial intelligence (AI) model.

10. A method, comprising:
monitoring, by a system comprising a processor, industrial asset data generated by industrial assets that are in service within an industrial facility, wherein the industrial asset data comprises operational and status information for the industrial assets; and
in response to determining, based on analysis of the industrial asset data, that a subset of the industrial asset data satisfies a condition indicative of a current or predicted risk to a first industrial asset of the industrial assets:
determining, by the system, one or more first maintenance tasks predicted to mitigate the current or predicted risk;
identifying, by the system based on defined interdependencies between the industrial assets, a second industrial asset of the industrial assets having a likelihood of experiencing a performance issue due to the current or predicted risk to the first industrial asset;
determining, by the system, one or more second maintenance tasks predicted to mitigate the performance issue; and
generating, by the system, a work order prescribing the one or more first maintenance tasks and the one or more second maintenance tasks.

11. The method of claim 10, wherein the analysis comprises generating a prompt, directed to a generative artificial intelligence (AI) model, designed to cause the generative AI model to generate a response that is processed to determine whether the subset of the industrial asset data satisfies the condition.

12. The method of claim 11, at least one of:
wherein
the response from the generative AI model is a first response, and
the determining of the one or more first maintenance tasks or the one or more second maintenance tasks is based on second responses prompted from the generative AI model; and
the method further comprising determining whether the subset of the industrial asset data satisfies the condition based on content of a model trained with training data, wherein the training data comprises at least one of technical specification data for the industrial assets, information from past work orders that were generated for the industrial assets, historical operational or status data for the industrial assets, information about technicians employed by the plant facility, or financial data for the plant facility.

13. The method of one of claims 10 to 12, further comprising selecting, by the system, one or more technicians, from a set of technicians registered as being employed by the plant facility, to perform the one or more first maintenance tasks or the one or more second maintenance tasks,
wherein the generating of the work order comprises designating the one or more first maintenance tasks or the one or more second maintenance tasks to the one or more technicians.

14. The method of claim 13, wherein the selecting comprises:
referencing technician key performance indicator (KPI) data that defines, for respective technicians of the set of technicians, the technicians' levels of training or experience in different types of maintenance activities, and
selecting the one or more technicians based on a determination that the technician KPI data indicates that the one or more technicians have a level of training or experience in performing the one or more first maintenance tasks or the one or more second maintenance tasks that satisfies a defined criterion.

15. A non-transitory computer-readable medium having stored thereon instructions that, in response to execution, cause a work order management system comprising a processor to perform operations, the operations comprising:
monitoring industrial asset data generated by industrial assets that are in service within an industrial facility, wherein the industrial asset data comprises operational and status information for the industrial assets;
in response to determining, based on analysis of the industrial asset data, that a subset of the industrial asset data satisfies a condition indicative of a current or predicted risk to an industrial asset of the industrial assets:
formulating one or more first maintenance tasks predicted to mitigate the current or predicted risk;
identifying, based on defined interdependencies between the industrial assets, a second industrial asset of the industrial assets having a likelihood of experiencing a performance issue due to the current or predicted risk to the first industrial asset;
formulating one or more second maintenance tasks predicted to mitigate the performance issue; and
generating a work order prescribing the one or more first maintenance tasks and the one or more second maintenance tasks,
preferably further comprising determining that the subset of the industrial asset data satisfies the condition based on content of a model trained with training data, wherein the training data comprises at least one of technical specification data for the industrial assets, information from past work orders that were generated for the industrial assets, historical operational or status data for the industrial assets, information about technicians employed by the plant facility, or financial data for the plant facility.
